# EUROPEAN PATENT APPLICATION

(11) **EP 4 426 010 A1**
(43) Date of publication of application: **04.09.2024**
(21) Application number: 22900690.3
(22) Date of filing: 02.12.2022
(51) Int. Cl.: H04W 36/00

(54) **HANDOVER METHOD, COMMUNICATION APPARATUS, AND COMMUNICATION SYSTEM**

(30) Priority: 03.12.2021 CN 202111467747
(71) Applicant: Huawei Technologies Co., Ltd., Shenzhen, Guangdong 518129 (CN)
(72) Inventor: ZHENG, Wuyang, Shenzhen, Guangdong 518129 (CN); GENG, Tingting, Shenzhen, Guangdong 518129 (CN)
(74) Representative: Epping - Hermann - Fischer
(86) International application number: PCT/CN2022/136269
(87) International publication number: WO 2023/098886

(57) **Abstract**

A handover method, a communication apparatus, and a communication system are provided. The method includes: A source network device determines to trigger a cell handover of a first handover type, where the first handover type includes a conditional handover (CHO) that is based on a beam-level measurement result. The source network device sends first indication information to a candidate network device to which a candidate cell belongs, where the first indication information indicates the first handover type. The source network device receives a first handover configuration for the first handover type from the candidate network device. The candidate network device may quickly determine, by using the first indication information, that the cell handover triggered by the source network device is of the first handover type, to send the corresponding first handover configuration to the source network device. This improves efficiency of performing a cell handover by a terminal device.

## Description

### CROSS-REFERENCE TO RELATED APPLICATIONS

This application claims priority to Chinese Patent Application No. 202111467747.4, filed with the China National Intellectual Property Administration on December 3, 2021 and entitled "HANDOVER METHOD, COMMUNICATION APPARATUS, AND COMMUNICATION SYSTEM", which is incorporated herein by reference in its entirety.

### TECHNICAL FIELD

Embodiments of this application relate to the field of communication technologies, and in particular, to a handover method, a communication apparatus, and a communication system.

### BACKGROUND

In a mobile communication system, a terminal device may be handed over between cells due to movement of the terminal device or another reason. The cell handover may be implemented through a layer 3 (layer 3, L3), or may be implemented through a layer 1 (layer 1, L 1) or a layer 2 (layer 2, L2). Compared with the cell handover implemented through the L3, the cell handover implemented through the L1 or the L2 can reduce a cell handover delay.

To improve a handover success rate, a conditional handover (conditional handover, CHO) mechanism is proposed. Currently, how to perform a CHO through the L1 or the L2 needs to be further discussed.

### SUMMARY

Embodiments of this application provide a handover method, a communication apparatus, and a communication system, to implement a CHO through an L1 or an L2.

According to a first aspect, a handover method is provided. The method may be performed by a source network device, or may be performed by a component of the source network device. Using an example in which an execution body is the source network device, the method may be implemented through the following steps: The source network device determines to trigger a cell handover of a first handover type, where the first handover type includes a CHO that is based on a beam-level measurement result, and may also be referred to as an L1/L2 CHO. The source network device sends first indication information to a candidate network device to which a candidate cell belongs, where the first indication information indicates the first handover type. Optionally, after sending the first indication information to the candidate network device, the source network device may further receive a first handover configuration from the candidate network device, where the first handover configuration corresponds to the first handover type.

The source network device sends the first indication information to the candidate network device, to indicate the first handover type. The candidate network device may determine, based on the first indication information, that a type of the current cell handover triggered by the source network device is the first handover type rather than a second handover type. Therefore, the candidate network device may subsequently perform an operation related to the first handover type, for example, may send the corresponding handover configuration to the source network device for the first handover type, to avoid sending a handover configuration for the second handover type by mistake. The type of the current cell handover triggered by the source network device can be directly and quickly indicated by the first indication information, to improve efficiency of the cell handover of the first handover type. In conclusion, the source network device sends the first indication information to the candidate network device to indicate the first handover type, to help improve a cell handover process of the L1/L2 CHO.

In a possible design, the first indication information may be included in a handover request message. Signaling of the existing handover request message carries the first indication information, so that the handover type is indicated without changing a signaling format in an existing protocol.

In a possible design, the first indication information further indicates a second handover type, and the second handover type includes a CHO that is based on a cell-level measurement result, and may also be referred to as an L3 CHO. The first indication information indicates two handover types, to notify the candidate network device that the type of the cell handover triggered by the source network device is the first handover type and the second handover type. The candidate network device may prepare handover configurations corresponding to the two handover types. Indicating the two handover types by the first indication information can reduce signaling overheads.

On the basis that the first indication information further indicates the second handover type, the source network device may further receive a second handover configuration from the candidate network device, where the second handover configuration corresponds to the second handover type.

In a possible design, the method further includes: The source network device sends second indication information to the candidate network device, where the second indication information indicates a second handover type. In other words, the first handover type and the second handover type are separately indicated by different indication information, and reliability is high.

In a possible design, the source network device may further receive third indication information from the candidate network device, where the third indication information indicates the first handover type and/or the second handover type, and the second handover type includes the CHO that is based on the cell-level measurement result. Optionally, the source network device may further receive the handover configuration from the candidate network device. The source network device can learn of, by using the third indication information, a handover type corresponding to the received handover configuration. In a scenario in which the two handover types are requested, the source network device may learn, based on the third indication information, whether the handover configurations for both the requested handover types have been received. When the handover configurations are not completely received, the source network device may wait for specific duration, so that a handover preparation process can be improved.

In a possible design, the source network device may further receive fifth indication information from a network device accessed by a terminal device after a handover, where the fifth indication information indicates a type of the cell handover that has been performed by the terminal device, the type of the cell handover is the first handover type and/or the second handover type, and the second handover type includes the CHO that is based on the cell-level measurement result. The source network device determines, based on the fifth indication information, a type of a cell handover performed in a source cell. The source cell belongs to the source network device, and is a cell accessed by the terminal device before the current cell handover. The source network device uses, as historical information, the type of the cell handover that has been performed by the terminal device, and determines, based on the historical information, the type of the cell handover performed in the source cell, so that a more appropriate handover type can be selected, thereby improving stability, efficiency, and performance of a subsequent cell handover of the terminal device.

In a possible design, that the source network device determines to trigger a cell handover of a first handover type includes the following step: The source network device determines, based on the first handover type and the second handover type, to trigger the cell handover of the first handover type, where the second handover type includes the CHO that is based on the cell-level measurement result. Optionally, the source network device may determine the handover type based on the historical information, a measurement result received from the terminal device, or a combination of the measurement result received from the terminal device and the historical information.

According to a second aspect, a handover method is provided. The method may be performed by a candidate network device, or may be performed by a component of the candidate network device. Using an example in which an execution body is the candidate network device, the method may be implemented through the following steps: The candidate network device receives first indication information from a source network device, where the first indication information indicates a first handover type, and the first handover type includes a conditional handover CHO that is based on a beam-level measurement result. The candidate network device determines, based on the first indication information, a first handover configuration corresponding to the first handover type, and sends the first handover configuration to the source network device. The candidate network device receives the first indication information from the source network device, so that the candidate network device can determine, based on the first indication information, that a type of a current cell handover triggered by the source network device is the first handover type rather than a second handover type. Therefore, the candidate network device may subsequently perform an operation related to the first handover type, for example, may deliver the corresponding handover configuration for the first handover type, to avoid sending a handover configuration for the second handover type by mistake. The type of the current cell handover triggered by the source network device can be directly and quickly indicated by the first indication information, so that the candidate network device can quickly determine that the cell handover triggered by the source network device is of the first handover type, to send the corresponding first handover configuration to the source network device. This improves efficiency of the cell handover of the first handover type. In conclusion, the candidate network device receives the first indication information from the source network device, so that a cell handover process of an L1/L2 CHO can be improved. In a possible design, the first indication information may be included in a handover request message.

In a possible design, the first indication information further indicates a second handover type, and the second handover type includes a CHO that is based on a cell-level measurement result, and may also be referred to as an L3 CHO.

In a possible design, the candidate network device sends third indication information to the source network device, where the third indication information indicates the first handover type and/or the second handover type, and the second handover type includes the CHO that is based on the cell-level measurement result.

For beneficial effects of the second aspect and the foregoing possible designs of the second aspect, refer to corresponding descriptions in the first aspect. Details are not described herein again.

In a possible design, the first handover configuration includes a first random access resource, and there is a first correspondence between the first handover type and the first random access resource. On this basis, optionally, when the candidate network device is a target network device to be accessed by a terminal device, the candidate network device may further receive a first message in a random access process from the terminal device. The candidate network device determines, based on the first correspondence and the first random access resource corresponding to the first message, that a handover type of a cell handover initiated by the terminal device is the first handover type. If the candidate network device further sends a second handover configuration to the terminal device, the second handover configuration may correspond to a second random access resource. In this way, the handover configurations may be distinguished by using different random access resources. When the terminal device performs random access, the target network device may distinguish, based on the random access resource, the handover type of the cell handover initiated by the terminal device.

In a possible design, the first handover configuration may further include a first cell radio network temporary identifier (cell radio network temporary identifier, C-RNTI), and there is a second correspondence between the first handover type and the first C-RNTI. In this way, when the terminal device performs random access to the target network device, if the terminal device determines that the type of the cell handover is the first handover type, the terminal device sends the first C-RNTI to the target network device. There may be one or more candidate network devices, and the target network device belongs to the candidate network device. The target network device receives the first C-RNTI from the terminal device, and determines, based on the first C-RNTI and the second correspondence, that the type of the cell handover initiated by the terminal device is the first handover type. If the candidate network device further sends the second handover configuration to the terminal device, the second handover configuration may further include a second C-RNTI, and there may be a third correspondence between the second handover type and the second C-RNTI. In this way, when the terminal device performs random access to the target network device, if the terminal device determines that the type of the cell handover is the second handover type, the terminal device sends the second C-RNTI to the target network device. The target network device receives the second C-RNTI from the terminal device, and determines, based on the second C-RNTI and the third correspondence, that the type of the cell handover initiated by the terminal device is the second handover type. In this way, the handover configurations may be distinguished by using different C-RNTIs. Therefore, when the terminal device performs random access to the target network device, the target network device may distinguish, based on the different C-RNTIs, the type of the cell handover initiated by the terminal device.

In a possible design, the candidate network device is a target network device to which a terminal device performs a cell handover, and may further receive fourth indication information from the terminal device, where the fourth indication information indicates a handover type of the cell handover initiated by the terminal device.

In a possible design, the candidate network device is a network device accessed by the terminal device after the handover, and sends fifth indication information to the source network device, where the fifth indication information indicates the type of the cell handover performed by the terminal device. In this way, the source network device may determine, based on the type of the cell handover performed by the terminal device, a type of a cell handover performed in a source cell, where the source cell is a cell in which the terminal device is located before the cell handover. The source network device uses, as historical information, the handover type that has been selected by the terminal device to perform the cell handover, and determines, based on the historical information, the type of the cell handover performed in the source cell, so that a more appropriate handover type can be selected, thereby ensuring stability, efficiency, and performance of a subsequent cell handover of the terminal device.

According to a third aspect, a handover method is provided. The method may be performed by a terminal device, or may be performed by a component of the terminal device. Using an example in which an execution body is the terminal device, the method may be implemented through the following steps: The terminal device receives a first handover configuration and a second handover configuration from a candidate network device, where the first handover configuration includes a configuration of a candidate cell of a first handover type, the second handover configuration includes a configuration of a candidate cell of a second handover type, the first handover type includes a CHO that is based on a beam-level measurement result, and the second handover type includes a CHO that is based on a cell-level measurement result. The terminal device determines a target handover type from the first handover type and the second handover type, and determines a target cell from the candidate cell of the first handover type and the candidate cell of the second handover type. The terminal device performs handover to the target cell based on the target handover type. The first handover type may also be referred to as an L1/L2 CHO. The terminal device receives the two handover configurations, so that the terminal device may perform beam-level measurement based on the first handover configuration, perform cell-level measurement based on the second handover configuration, and further determine the target handover type and the target cell based on the beam-level measurement result and the cell-level measurement result. In this way, when a source network device triggers the L1/L2 CHO and an L3 CHO, an appropriate target handover type and target cell can be flexibly selected, to complete the cell handover and improve a handover success rate.

In a possible design, the terminal device may determine the target handover type and the target cell in the following manner: if a first candidate cell is the candidate cell of the first handover type, is the candidate cell of the second handover type, meets a handover condition of the first handover type, and meets a handover condition of the second handover type, determining the first candidate cell as the target cell, and determining the first handover type as the target handover type. The terminal device may obtain the beam-level measurement result for the candidate cell of the first handover type, obtain the cell-level measurement result for the candidate cell of the second handover type, determine, based on the beam-level measurement result, whether the candidate cell of the first handover type meets the handover condition of the first handover type, and determine, based on the cell-level measurement result, whether the candidate cell of the second handover type meets the handover condition of the second handover type. The cell-level measurement result is usually more stable than the beam-level measurement result. Therefore, when the first candidate cell is not only the candidate cell of the first handover type but also the candidate cell of the second handover type, and meets the two handover conditions, it indicates that a measurement result for the first candidate cell is stable. On this basis, selecting the first handover type can reduce a handover delay. Therefore, the handover delay is reduced when stability of the measurement result is ensured. In a scenario in which the two handover types coexist, selecting a more appropriate handover type and target cell increases the handover success rate.

In a possible design, the terminal device may determine the target handover type and the target cell in the following manner: If a plurality of second candidate cells are candidate cells of the first handover type, are candidate cells of the second handover type, meet a handover condition of the first handover type, and meet a handover condition of the second handover type, the terminal device determines, based on one or more of the following parameters, that one of the plurality of second candidate cells is the target cell: reference signal received power, reference signal received quality, whether quality of a beam reaches a threshold, or a quantity of beams associated with a contention-free random access resource. The terminal device may obtain the beam-level measurement result for the candidate cell of the first handover type, obtain the cell-level measurement result for the candidate cell of the second handover type, determine, based on the beam-level measurement result, whether the candidate cell of the first handover type meets the handover condition of the first handover type, and determine, based on the cell-level measurement result, whether the candidate cell of the second handover type meets the handover condition of the second handover type. The cell-level measurement result is usually more stable than the beam-level measurement result. Therefore, when the second candidate cell is not only the candidate cell of the first handover type but also the candidate cell of the second handover type, and meets the two handover conditions, it indicates that a measurement result for the second candidate cell is stable. On this basis, selecting the first handover type can reduce a handover delay. Therefore, the handover delay is reduced when stability of the measurement result is ensured. A better cell is further selected from the plurality of second candidate cells based on the parameter. For example, a cell with better reference signal received quality is selected from the plurality of second candidate cells based on the reference signal received quality. In this way, in a scenario in which the two handover types coexist, selecting a more appropriate handover type and target cell increases the handover success rate.

In a possible design, the terminal device may determine the target handover type and the target cell in the following manner: if a third candidate cell is the candidate cell of the first handover type and meets a handover condition of the first handover type, and a fourth candidate cell is the candidate cell of the second handover type and meets a handover condition of the second handover type, determining, based on priority information, that a candidate cell corresponding to a handover type with a high priority in the third candidate cell and the fourth candidate cell is the target cell, where the priority information indicates priorities of the first handover type and the second handover type in a cell handover process. In this way, the handover type with the high priority and the corresponding target cell can be preferentially selected. The priority information may be configured by a network side. The network side determines the priority based on historical information, and the priority can better comply with a current network environment, so that the handover type and the target cell selected based on the priority is more appropriate, thereby improving the handover success rate. The priority information may alternatively be determined by the terminal device. This is flexible.

In a possible design, the terminal device may determine the target handover type and the target cell in the following manner: if a plurality of fifth candidate cells are candidate cells of the first handover type and meet a handover condition of the first handover type, and a plurality of sixth candidate cells are candidate cells of the second handover type and meet a handover condition of the second handover type, determining, based on priority information, a plurality of cells corresponding to a handover type with a high priority in the plurality of fifth candidate cells and the plurality of sixth candidate cells, where the priority information indicates priorities of the first handover type and the second handover type in a cell handover process; and determining, based on one or more of the following parameters, that one of the plurality of cells is the target cell: reference signal received power, reference signal received quality, whether quality of a beam reaches a threshold, or a quantity of beams associated with a contention-free random access resource. A better cell is further selected from the plurality of candidate cells based on the parameter. In this way, in a scenario in which the two handover types coexist, selecting a more appropriate handover type and target cell increases the handover success rate.

According to a fourth aspect, a communication apparatus is provided. The apparatus may be a network device or a component (for example, a chip, a chip system, or a circuit) used for the network device. The network device may be used as a source network device from which a terminal device performs a cell handover. The apparatus has a function of implementing the method according to any one of the first aspect or the possible designs of the first aspect. The function may be implemented by hardware, or may be implemented by hardware by executing corresponding software. The hardware or software includes one or more modules corresponding to the foregoing functions. In a design, the apparatus may include a processing unit and a transceiver unit. The transceiver unit further includes a receiving unit and a sending unit. For example, the processing unit is configured to determine to trigger a cell handover of a first handover type, where the first handover type includes a CHO that is based on a beam-level measurement result. The sending unit is configured to send first indication information to a candidate network device to which a candidate cell belongs, where the first indication information indicates the first handover type. Optionally, after the sending unit sends the first indication information to the candidate network device, the receiving unit may further receive a first handover configuration for the first handover type from the candidate network device.

For more detailed descriptions of the processing unit, the receiving unit, and the sending unit, directly refer to related descriptions in the first aspect.

For beneficial effects of the fourth aspect and the possible designs, refer to descriptions of corresponding parts in the first aspect.

According to a fifth aspect, a communication apparatus is provided. The apparatus may be a network device or a component (for example, a chip, a chip system, or a circuit) used for the network device. The network device may be used as a candidate network device to which a terminal device performs a cell handover. The apparatus has a function of implementing the method according to any one of the second aspect or the possible designs of the second aspect. The function may be implemented by hardware, or may be implemented by hardware by executing corresponding software. The hardware or software includes one or more modules corresponding to the foregoing functions. In a design, the apparatus may include a processing unit and a transceiver unit. The transceiver unit further includes a receiving unit and a sending unit. For example, the receiving unit is configured to receive first indication information from a source network device, where the first indication information indicates a first handover type, and the first handover type includes a CHO that is based on a beam-level measurement result. The processing unit is configured to send a first handover configuration for the first handover type to the source network device based on the first indication information and by using the sending unit.

For more detailed descriptions of the processing unit, the receiving unit, and the sending unit, directly refer to related descriptions in the second aspect.

For beneficial effects of the fifth aspect and the possible designs, refer to descriptions of corresponding parts in the second aspect.

According to a sixth aspect, a communication apparatus is provided. The apparatus may be a terminal device, or may be a component (for example, a chip, a chip system, or a circuit) in the terminal device. The apparatus has a function of implementing the method according to any one of the third aspect or the possible designs of the third aspect. The function may be implemented by hardware, or may be implemented by hardware by executing corresponding software. The hardware or software includes one or more modules corresponding to the foregoing functions. In a design, the apparatus may include a processing unit and a transceiver unit. The transceiver unit further includes a receiving unit and a sending unit. For example, the receiving unit is configured to receive a first handover configuration and a second handover configuration from a candidate network device, where the first handover configuration includes a configuration of a candidate cell of a first handover type, the second handover configuration includes a configuration of a candidate cell of a second handover type, the first handover type includes a CHO that is based on a beam-level measurement result, and the second handover type includes a CHO that is based on a cell-level measurement result. The processing unit is configured to determine a target handover type from the first handover type and the second handover type, and determines a target cell from the candidate cell of the first handover type and the candidate cell of the second handover type.

For more detailed descriptions of the processing unit, the receiving unit, and the sending unit, directly refer to related descriptions in the third aspect.

For beneficial effects of the sixth aspect and the possible designs, refer to descriptions of corresponding parts in the third aspect.

According to a seventh aspect, an embodiment of this application provides a communication apparatus. The communication apparatus includes a memory and a processor. The memory is configured to store one or more computer programs. When the one or more computer programs are run, the method described in the first aspect or the possible designs of the first aspect is performed.

According to an eighth aspect, an embodiment of this application provides a communication apparatus. The communication apparatus includes a memory and a processor. The memory is configured to store one or more computer programs. When the one or more computer programs are run, the method described in the second aspect or the possible designs of the second aspect is performed.

According to a ninth aspect, an embodiment of this application provides a communication apparatus. The communication apparatus includes a memory and a processor. The memory is configured to store one or more computer programs. When the one or more computer programs are run, the method described in the third aspect or the possible designs of the third aspect is performed.

Optionally, the communication apparatuses provided in the seventh aspect to the ninth aspect further include an interface circuit, and the processor and the interface circuit are coupled to each other. The interface circuit is configured to receive a signal from a communication apparatus other than the communication apparatus, and transmit the signal to the processor; or send a signal from the processor to a communication apparatus other than the communication apparatus. It may be understood that the interface circuit may be a transceiver or an input/output interface.

Optionally, the memory in the seventh aspect to the ninth aspect is configured to store instructions executed by the processor, store input data needed by the processor to run the instructions, or store data generated after the processor runs the instructions. The memory may be a physically independent unit, or may be coupled to the processor; or the processor includes the memory.

According to a tenth aspect, an embodiment of this application provides a computer-readable storage medium. The computer-readable storage medium stores a computer program or readable instructions. When the computer program or the readable instructions are executed by a communication apparatus, the methods in the foregoing aspects or the possible designs of the aspects are enabled to be performed.

According to an eleventh aspect, an embodiment of this application provides a chip system. The chip system includes a processor, and may further include a memory. The memory is configured to store a program, instructions, or code. The processor is configured to execute the program, the instruction, or the code stored in the memory, to implement the methods in the foregoing aspects or the possible designs of the foregoing aspects. The chip system may include a chip, or may include a chip and another discrete component.

According to a twelfth aspect, a computer program product including instructions is provided. When the computer program product is executed by a communication apparatus, the methods in the foregoing aspects or the possible designs of the foregoing aspects are enabled to be performed. According to a thirteenth aspect, a communication system is provided, including the apparatus in the fourth aspect or the seventh aspect and the apparatus in the fifth aspect or the eighth aspect. Optionally, the communication system may further include the apparatus in the sixth aspect or the ninth aspect.

### BRIEF DESCRIPTION OF DRAWINGS

FIG. 1 is a diagram of an architecture of a communication system according to an embodiment of this application;
FIG. 2 is a diagram of a process of a cell handover of a second handover type according to an embodiment of this application;
FIG. 3 is a diagram of a process of a cell handover of a first handover type according to an embodiment of this application;
FIG. 4 is a schematic flowchart 1 of a handover method according to an embodiment of this application;
FIG. 5 is a schematic flowchart 2 of a handover method according to an embodiment of this application;
FIG. 6 is a schematic flowchart 3 of a handover method according to an embodiment of this application;
FIG. 7 is a diagram 1 of a structure of a communication apparatus according to an embodiment of this application; and
FIG. 8 is a diagram 2 of a structure of a communication apparatus according to an embodiment of this application.

### DESCRIPTION OF EMBODIMENTS

A handover method provided in embodiments of this application may be applied to a 4th generation (4th generation, 4G) communication system, for example, a long term evolution (long term evolution, LTE) communication system; may be applied to a 5th generation (5th generation, 5G) communication system, for example, a 5G new radio (new radio, NR) system; or may be applied to various future-evolved communication systems, for example, a 6th generation (6th generation, 6G) communication system, a space-air-ground-sea integrated communication system, or an integrated access and backhaul (integrated access and backhaul, IAB) scenario. It may be understood that a system architecture and an application scenario that are described in embodiments of this application are intended to describe technical solutions in embodiments of this application more clearly, and do not constitute a limitation on the technical solutions provided in embodiments of this application.

The following describes in detail embodiments of this application with reference to the accompanying drawings.

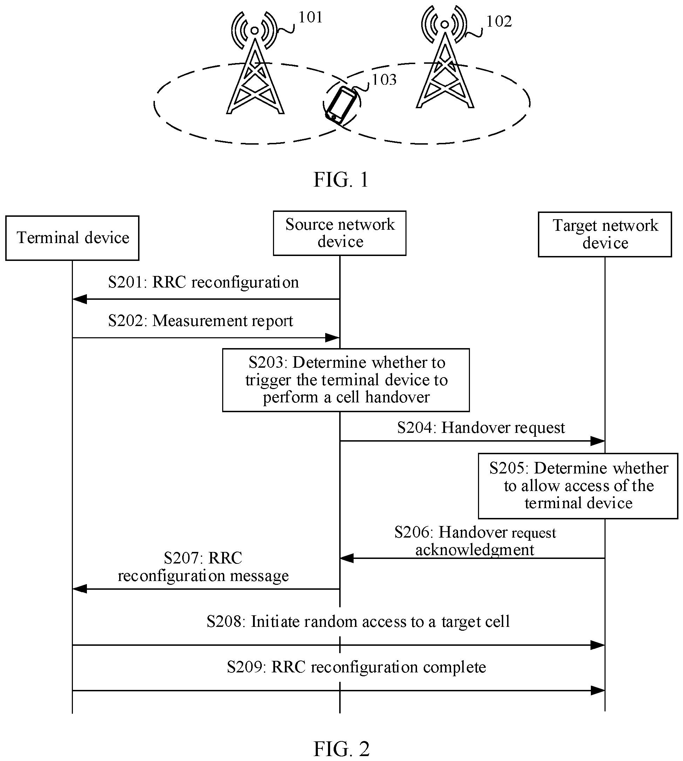

FIG. 1 is a diagram of an architecture of a communication system to which an embodiment of this application is applicable. The communication system includes two network devices: a network device 101 and a network device 102. The communication system may further include a terminal device 103. The network device 101 serves the terminal device 103 within coverage.

The solutions provided in embodiments of this application relate to an inter-cell handover of a terminal device, in other words, a handover of the terminal device from an accessed cell, namely, a serving cell of the terminal, to another cell. The cell in which the terminal device is located before the handover may be referred to as a source serving cell or a source cell of the terminal device, and the cell to which the terminal device is to be handed over or to which the terminal device is handed over may be referred to as a target serving cell or a target cell of the terminal device. In embodiments of this application, the source cell and the target cell are used as an example for description. A network device to which the source cell belongs may be referred to as a source network device, and a network device to which the target cell belongs may be referred to as a target network device. If the cell handover is performed in a conditional handover (conditional handover, CHO) manner, before the target cell is selected, a network side configures one or more candidate cells for the terminal device, and the terminal device selects, from the candidate cells, a cell that meets a condition as the target cell. A network device to which the candidate cell belongs may be referred to as a candidate network device. It may be understood that there may be one or more candidate network devices, and the target network device belongs to the candidate network device. For example, in FIG. 1, when the terminal device 103 needs to be handed over from the current serving cell due to movement or another reason, the network device 101 may be used as the source network device, and the network device 102 may be used as the candidate network device or the target network device.

The following describes concepts and forms of the network device 101, the network device 102, and the terminal device 103 in this application.

The terminal device 103 in this embodiment of this application may also be referred to as user equipment (user equipment, UE), a mobile station (mobile station, MS), a mobile terminal (mobile terminal, MT), or the like; and is a device that provides voice or data connectivity to a user, or may be an Internet-of-things device. For example, the terminal device includes a handheld device, a vehicle-mounted device, or the like that has a wireless connection function. The terminal device may be a mobile phone (mobile phone), a tablet computer, a notebook computer, a palmtop computer, a mobile internet device (mobile internet device, MID), a wearable device (for example, a smartwatch, a smart band, or a pedometer), a vehicle-mounted device (for example, an automobile, a bicycle, an electric vehicle, an aircraft, a ship, a train, or a high-speed train), a virtual reality (virtual reality, VR) device, an augmented reality (augmented reality, AR) device, a wireless terminal in industrial control (industrial control), a smart home device (for example, a refrigerator, a television, an air conditioner, or an electricity meter), an intelligent robot, a workshop device, a wireless terminal in self-driving (self-driving), a wireless terminal in remote medical surgery (remote medical surgery), a wireless terminal in a smart grid (smart grid), a wireless terminal in transportation safety (transportation safety), a wireless terminal in a smart city (smart city), a wireless terminal in a smart home (smart home), a flight device (for example, an intelligent robot, a hot balloon, an uncrewed aerial vehicle, or an aircraft), or the like. It should be understood that the terminal device in embodiments of this application may alternatively be a chip in the terminal device, or may be a communication apparatus, a unit, or a module that has a user-equipment-to-user-equipment (UE-to-UE, U2U) communication function, for example, an in-vehicle communication apparatus, an in-vehicle communication module, or an in-vehicle communication chip. In embodiments of this application, the terminal device may alternatively be a road side unit (road side unit) in an Internet-of-vehicles communication system, or a communication apparatus or a communication chip in the road side unit. The method provided in embodiments of this application may be performed by the terminal device, or may be performed by a component (for example, a processor, a chip, or a chip system) of the terminal device. An entity that performs the method in embodiments of this application may also be referred to as a communication apparatus. The communication apparatus may be the terminal device or the component (for example, the processor, the chip, or the chip system) of the terminal device.

The network device 101/102 may be a device in a radio access network, the radio access network may include one or more radio access network devices, and the network device 101/102 may be a radio access network device. The terminal device may be connected to the radio access network device in a wireless manner. The communication system may further include a core network (core network, CN), and the radio access network device is connected to the core network in a wireless or wired manner. A core network device and the radio access network device may be different independent physical devices, functions of the core network device and logical functions of the radio access network device may be integrated into a same physical device, or some functions of the core network device and some functions of the radio access network device may be integrated into one physical device.

The radio access network device may be various base stations, for example, an evolved NodeB (evolved NodeB, eNodeB), a transmission reception point (transmission reception point, TRP), a next generation NodeB (next generation NodeB, gNB) in a 5th generation (5th generation, 5G) mobile communication system, a next generation base station in a 6th generation (6th generation, 6G) mobile communication system, or a base station in a future mobile communication system; may be a device, for example, an access node, in a Wi-Fi system; or may be a module or unit, for example, a central unit (central unit, CU) or a distributed unit (distributed unit, DU), that completes a part of functions of a base station. The CU herein completes functions of a radio resource control protocol and a packet data convergence protocol (packet data convergence protocol, PDCP) layer of the base station, and may further implement functions of a service data adaptation protocol (service data adaptation protocol, SDAP) layer. The DU completes functions of a radio link control layer and a media access control (media access control, MAC) layer of the base station, and may further complete a part or all of functions of a physical layer. For specific descriptions of the foregoing protocol layers, refer to related technical specifications of the 3rd generation partnership project (3rd generation partnership project, 3GPP). The radio access network device may be a macro base station, may be a micro base station or an indoor base station, or may be a relay node, a donor (donor) node, or the like. A specific technology and a specific device form that are used by the radio access network device are not limited in embodiments of this application. In embodiments of this application, a function of the base station may be performed by a module (for example, a chip) in the base station, or may be performed by a control subsystem including the function of the base station. The control subsystem including the function of the base station herein may be a control center in the foregoing application scenario, for example, the smart grid, the industrial control, intelligent transportation, and the smart city. A function of the terminal may alternatively be performed by a module (for example, a chip or a modem) in the terminal, or may be performed by an apparatus including the function of the terminal.

When the specific handover method is described in this application, an example in which a device implementing the function of the base station is a network device and an example in which a device implementing the function of the terminal is a terminal device are used for description.

In this application, both the terminal device and the network device may be referred to as communication apparatuses. The network device 101 and the network device 102 in FIG. 1 may be referred to as communication apparatuses having a function of the network device, and the terminal device 103 may be referred to as a communication apparatus having a function of the terminal device.

Before the handover method provided in embodiments of this application is described, a handover type in embodiments of this application is first described, to facilitate understanding by a person skilled in the art.

In this application, the handover type may be referred to as a type for short, and may include a first handover type and a second handover type. (1) The second handover type is a cell handover implemented through an L3, namely, a cell handover implemented based on radio resource control (radio resource control, RRC) layer signaling. The following describes a procedure for the cell handover of the second handover type by using an example. For example, as shown in FIG. 2, a process in which a terminal device performs the cell handover of the second handover type may be described as follows.

S201: A source network device sends an RRC reconfiguration (RRC reconfiguration) message to the terminal device.

The RRC reconfiguration message includes one or more parameters of a measurement object, a report configuration, or a measurement identifier.

S202: The terminal device sends a measurement report to the source network device.

The terminal device measures a candidate cell based on the RRC reconfiguration message to form the measurement report. For example, the measurement may include that a signal strength in a current serving cell is lower than a threshold and a signal strength in a target cell is higher than the threshold.

S203: The source network device determines whether to trigger the terminal device to perform a cell handover.

Specifically, the source network device may determine, based on the received measurement report reported by the terminal device, whether the terminal device needs to be handed over from the current serving cell.

If it is determined to trigger the terminal device to perform the cell handover, S204 is performed. S204: The source network device sends a handover request (handover request) message to a target network device.

S205: The target network device determines whether to allow access of the terminal device. Specifically, the target network device may determine, based on a status, for example, a quantity of terminals connected to the target network device, whether to allow the access of the terminal device.

If the access of the terminal device is allowed, S206 is performed.

S206: The target network device sends a handover request acknowledgment (handover request acknowledgment) message to the source network device, and the source network device receives the handover request acknowledgment message from the target network device.

The handover request acknowledgment message may include a cell radio network temporary identifier (cell radio network temporary identifier, C-RNTI) of the target cell and/or a security-related parameter of the target network device.

S207: The source network device sends an RRC reconfiguration message to the terminal device. The RRC reconfiguration message may be referred to as a handover command, and may include the content included in the handover request acknowledgment message. The source network device transparently transmits the content included in the handover request acknowledgment message to the terminal device. Specifically, the RRC reconfiguration message may include related information of the target cell and a related configuration parameter needed by the terminal device to access the target cell. The related information of the target cell may include: identification information of the target cell, for example, a physical cell identifier (physical cell identifier, PCI) of the target cell, and/or frequency information corresponding to the target cell, for example, an absolute radio frequency channel number corresponding to the target cell. The related configuration parameter needed by the terminal device to access the target cell may include the C-RNTI allocated by the target cell to the terminal device, resource information of a random access channel (random access channel, RACH) for accessing the target cell, and/or the like.

S208: The terminal device initiates random access to the target network device based on the handover command.

S209: The terminal device sends an RRC reconfiguration complete (RRC reconfiguration complete) message to the target network device.

In the handover procedure in FIG. 2, the source network device determines, based on an L3 measurement result reported by the terminal device, whether to trigger the cell handover, where the L3 measurement result may also be referred to as a cell-level measurement result. In step S207, the source network device indicates, by using the RRC reconfiguration message, the terminal device to perform the handover. It can be learned that the second handover type is implemented through the L3, in other words, the second handover type is implemented through an RRC layer. In this application, the second handover type may also be referred to as an L3 handover, a layer-3 handover, or an RRC-layer handover, or may be understood as a cell handover triggered based on the cell-level measurement result.

The cell handover of the second handover type may be implemented by using another process. For example, one or more steps in the process shown in FIG. 2 may be omitted or replaced with another step. In this application, a cell handover implemented by using an L3 control mechanism is the second handover type, in other words, the cell handover triggered based on the cell-level measurement result is the second handover type.

(2) The first handover type is a cell handover implemented through an L1 or L2. The L1 is a physical layer (physical layer, PHY), and the L2 is a media access control (media access control, MAC) layer. The first handover type is a cell handover implemented through L1 or L2 signaling exchange.

In this application, the first handover type may also be referred to as an L1/L2 handover, or may be understood as a cell handover triggered based on a beam-level measurement result.

In an NR system, a beam may be represented by a spatial domain filter (spatial domain filter), a spatial filter (spatial filter), a spatial domain parameter (spatial domain parameter), a spatial parameter (spatial parameter), spatial domain setting (spatial domain setting), spatial setting (spatial setting), quasi-colocation (quasi-colocation, QCL) information, a QCL assumption, a QCL indication, or the like. The beam may be indicated by a transmission configuration indicator (transmission configuration indicator, TCI) state (state). The beam may alternatively be indicated by a spatial relation (spatial relation) parameter. Therefore, in this application, the beam may be replaced with the spatial domain filter, the spatial filter, the spatial domain parameter, the spatial parameter, the spatial domain setting, the spatial setting, the QCL information, the QCL assumption, the QCL indication, the TCI state (including a DL TCI state and/or a UL TCI state), the spatial relation (spatial relation), or the like. The foregoing terms are equivalent to each other. Alternatively, the beam may be replaced with another term representing the beam. This is not limited in this application.

The beam may be a wide beam, a narrow beam, or another type of beam. A technology for forming the beam may be a beamforming technology or another technology. The beamforming technology may be specifically a digital beamforming technology, an analog beamforming technology, a hybrid digital/analog beamforming technology, or the like. Optionally, a plurality of beams having a same communication characteristic or similar communication characteristics are considered as one beam. One beam may correspond to one or more antenna ports, and is for transmitting a data channel, a control channel, a sounding signal, and the like. The one or more antenna ports forming (corresponding to) the beam may also be considered as one antenna port set or one antenna port group.

Optionally, a process in which the terminal device performs beam-level measurement to obtain the beam-level measurement result may be as follows: A network device sends a reference signal in each beam direction, where the reference signal may be a synchronization signal/physical broadcast channel block (synchronization signal/physical broadcast channel block, SSB), or may be a CSI-RS (channel state information-reference signal). The terminal device performs measurement based on the reference signal that is for a target time-frequency resource and that is indicated by the network device. For example, the terminal device may obtain, through sampling, a plurality of transitory signal strengths in a time period that are of a beam corresponding to the reference signal, and weight the plurality of obtained signal strengths to obtain a measurement result for the corresponding beam.

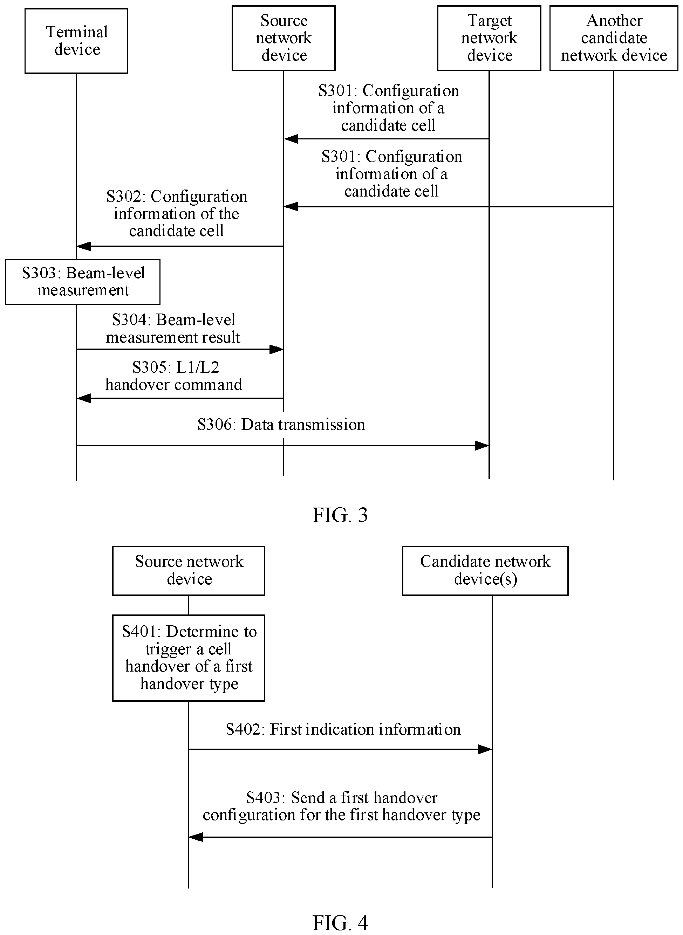

The following describes a procedure for the cell handover of the first handover type by using an example. For example, as shown in FIG. 3, a process in which the terminal device performs the cell handover of the first handover type may be described as follows.

S301: A candidate network device sends configuration information of a candidate cell to a source network device, and the source network device receives the configuration information of the candidate cell.

It may be understood that there may be one or more candidate cells. The plurality of candidate cells may correspond to a same candidate network device or different candidate network devices. If the plurality of candidate cells correspond to a plurality of candidate network devices, the plurality of candidate network devices respectively send, to the source network device, the configuration information of the candidate cells managed by the plurality of candidate network devices.

If the candidate cell and a source cell correspond to a same network device, this step may be omitted.

S302: The source network device sends the received configuration information of the candidate cell to the terminal device, and the terminal device receives the configuration information of the candidate cell.

The source network device may send an RRC message to the terminal device, where the RRC message carries the configuration information of the candidate cell, and may further include configuration information of the source cell. The RRC message may be an RRC reconfiguration message (RRC reconfiguration message).

The configuration information may include any one or more of the following: an SSB configuration, a TCI state configuration, or a UE-specific channel configuration. The UE-specific channel configuration may be, for example, configuration information such as a physical downlink shared channel (physical downlink shared channel, PDSCH) configuration, a physical downlink control channel (physical downlink control channel, PDCCH) configuration, a physical uplink shared channel (physical uplink shared channel, PDSCH) configuration, or a physical uplink control channel (physical uplink control channel, PUCCH) configuration. For content included in the configuration information of the candidate cell and the configuration information of the source cell, refer to the descriptions herein.

S303: The terminal device performs measurement based on the received configuration information. For example, the terminal device may perform beam-level measurement on reference signals of the source cell and the candidate cell.

S304: The terminal device sends a measurement result to the source network device, and the source network device receives the measurement result.

The measurement result includes beam-level measurement results for the source cell and the candidate cell.

S305: The source network device notifies, by using L1/L2 signaling, the terminal device to perform the cell handover.

The L1/L2 signaling may be a handover command, and may be L1 signaling or L2 signaling. The L1 signaling may be DCI carried on a PDCCH. The L2 signaling may be a MAC CE.

The source network device determines, based on the beam-level measurement results received in step S304, whether the terminal device should perform the cell handover. If the handover needs to be performed, the terminal device is indicated by using the L1/L2 signaling to perform the handover. The L 1/L2 signaling includes indication information of a target cell and a beam direction that should be used by the terminal device in the target cell. The indication information of the target cell may be, for example, a PCI of the target cell, and the beam direction is indicated, for example, by a TCI state.

S306: The terminal device performs data transmission with a target network device to which the target cell belongs.

After receiving the L 1/L2 handover signaling, the terminal device performs data transmission with the target network device in the target cell by using configuration information of the target cell. The cell handover is complete.

The procedure shown in FIG. 3 is merely an example of the process in which the terminal device performs the cell handover of the first handover type. In this application, the cell handover implemented through the L1/L2 is the first handover type, in other words, the cell handover triggered based on the beam-level measurement result is the first handover type.

The foregoing describes the cell handover procedures of the second handover type and the first handover type by using FIG. 2 and FIG. 3. In this application, the first handover type may be represented by an L1/L2 CHO, and the second handover type may be represented by an L3 CHO. It should be noted that the cell-level measurement result is obtained by performing filtering and weighting on the beam-level measurement result. Therefore, the cell-level measurement result is more stable and accurate than the beam-level measurement result. However, an L1/L2 measurement result is obtained faster than the L3 measurement result. Furthermore, the terminal device is indicated by using L3 signaling to perform the cell handover that is implemented through the L3, and is indicated by using the L1/L2 signaling to perform the cell handover that is implemented through the L1/L2. A transmission delay of the L1/L2 signaling is shorter than a transmission delay of the L3 signaling. Therefore, compared with the cell handover implemented through the L3, the cell handover implemented through the L 1/L2 can reduce a cell handover delay. Generally, when moving to a cell edge, the terminal device performs a cell handover according to a handover instruction of the network device. Because a channel condition of the terminal device at the cell edge is poor, the handover instruction may fail to be received, or a handover configuration may fail to be received. To improve a handover success rate, the CHO may be performed on the basis of using the first handover type or the second handover type. The terminal device may receive the handover configuration of the network device through the CHO when the channel condition is good, and select a candidate cell as a target cell for the handover based on the received handover configuration when the handover needs to be performed, for example, when the terminal device moves to the cell edge, to complete the cell handover. This can improve the handover success rate. Further, the technical solutions provided in embodiments of this application help improve the L1/L2 CHO, and can improve a rate and the success rate of the cell handover. Based on the architecture shown in FIG. 1 and the handover procedures shown in FIG. 2 and FIG. 3, as shown in FIG. 4, a procedure for a handover method according to an embodiment of this application is described as follows.

S401: A source network device determines to trigger a cell handover of a first handover type. The first handover type includes a CHO that is based on a beam-level measurement result. For more detailed descriptions of the first handover type, refer to the foregoing descriptions of the point (2).

S402: The source network device sends first indication information to a candidate network device to which a candidate cell belongs. Correspondingly, the candidate network device receives the first indication information from the source network device.

The first indication information indicates the first handover type.

Optionally, there may be one or more candidate cells. If the plurality of candidate cells belong to a same network device, the source network device sends the first indication information to the same network device to which the plurality of candidate cells belong. If the plurality of candidate cells belong to different network devices, the source network device needs to separately send the first indication information to the plurality of candidate network devices corresponding to the plurality of candidate cells.

S403: The candidate network device determines, based on the first indication information, a first handover configuration corresponding to the first handover type, and sends the first handover configuration to the source network device. Correspondingly, the source network device receives the first handover configuration from the candidate network device.

In the embodiment in FIG. 4, the source network device sends the first indication information to the candidate network device, to indicate the first handover type. The candidate network device may determine, based on the first indication information, that a type of the current cell handover triggered by the source network device is the first handover type rather than a second handover type. Therefore, the candidate network device may subsequently perform an operation related to the first handover type, for example, may deliver the corresponding handover configuration for the first handover type, to avoid sending a handover configuration for the second handover type by mistake. The type of the current cell handover triggered by the source network device can be directly and quickly indicated by the first indication information, to improve efficiency of the cell handover of the first handover type. In conclusion, the source network device sends the first indication information to the candidate network device to indicate the first handover type, to help improve a cell handover process of an L1/L2 CHO.

The following provides some optional implementations based on the embodiment in FIG. 4.

The first indication information may be included in a handover request (handover request) message. The source network device sends the handover request message to the candidate network device to which the candidate cell belongs, and the candidate network device receives the handover request message from the source network device, where the handover request message carries the first indication information.

Generally, when determining to trigger the cell handover of the first handover type, the source network device sends handover preparation information of the cell handover of the first handover type to the candidate network device, where the handover preparation information may be denoted as first handover preparation information herein. The first handover preparation information may be used by the candidate network device to determine the first handover configuration. The first handover preparation information may be sent in a handover preparation period. For example, the first handover preparation information may be included in the handover request message.

The handover request message may include the first indication information, or may include the first handover preparation information. Certainly, the first indication information and the first handover preparation information may be sent in a same message, or may be separately sent. In addition, the first indication information may alternatively be sent by using a message other than the handover request message. For example, the first indication information is sent by using an RRC reconfiguration message. Similarly, the first handover preparation information may alternatively be carried in a message other than the handover request message for sending.

The following describes possible representation forms of the first indication information included in the handover request message. For example, the handover request message includes an information element named CHO trigger (CHO trigger). The first indication information may be in the CHO trigger information element. A new CHO trigger option may be added to the CHO trigger information element, and the CHO trigger option is the first indication information. For example, the CHO trigger option is a CHO of the first handover type (the L1/L2 CHO). The CHO trigger information element may be in an information element named conditional handover information request (conditional handover information request). For example, the representation form of the first indication information is: the handover request message -> the conditional handover information request information element -> the CHO trigger information element -> the CHO trigger option, where the symbol "->" represents a hierarchical relationship of messages or information elements, a message may include an information element, and a high-level information element may include a secondary-level information element.

For another example, the first indication information may alternatively be included in the conditional handover information request information element, and is outside the CHO trigger information element. This may also be understood as: The first indication information and the CHO trigger information element are at a same level, and are both in the conditional handover information request information element. For example, the representation form of the first indication information is: the handover request message -> the conditional handover information request information element -> the first indication information.

For another example, the first indication information may alternatively be included in the handover request and outside the conditional handover information request information element. This may also be understood as: The first indication information and the conditional handover information request information element are at a same level, and are both in the handover request message. For example, a cause (cause) value is added to the handover request, a cause value indicated by the cause value information element is related to the L1/L2 handover, and the cause value information element indicates a cause of sending the handover request. For example, the representation form of the first indication information is: the handover request message -> the first indication information.

In the foregoing several representation forms of the first indication information, an information element in the handover request message is reused or a new information element is added to the handover request message. In a possible design, an information element location for the first indication information may not be limited by locations in the foregoing several examples. For example, a representation form of indication information is L1/L2 CHO {True, False}, where when a value is True, the indication information is the first indication information, and indicates the first handover type, namely, the L1/L2 CHO. When a value is False, it indicates that the type is not the first handover type.

Before the source network device determines, in S401, to trigger the cell handover of the first handover type, the source network device may further obtain a beam-level measurement result for the candidate cell from a terminal device. For example, for a specific manner of obtaining the beam-level measurement result for the candidate cell, refer to steps S301 to S304 in the embodiment in FIG. 3. The source network device may determine, based on the first handover type and the second handover type, to trigger the cell handover of the first handover type. For example, the source network device receives the beam-level measurement result and a cell-level measurement result from the terminal device, where the beam-level measurement result is a measurement result for a candidate cell of the first handover type, and the cell-level measurement result is a measurement result for a candidate cell of the second handover type. The source network device may process the beam-level measurement result and the cell-level measurement result, to determine to trigger the cell handover of the first handover type. For example, the source network device uses the beam-level measurement result and the cell-level measurement result as input parameters, to calculate, by using an algorithm, an output result corresponding to the first handover type. For a manner in which the source network device obtains the cell-level measurement result for the candidate cell, refer to steps S201 and S202 in the embodiment in FIG. 2.

Certainly, the source network device may alternatively trigger a cell handover of the second handover type. When triggering the cell handover of the second handover type, the source network device also indicates the second handover type to the candidate network device to which the candidate cell belongs.

Optionally, the first indication information may further indicate the second handover type. In other words, the first indication information indicates the first handover type and the second handover type, so that signaling overheads can be reduced. In this implementation, when the first indication information is set to a first value, the first indication information indicates the first handover type; or when the first indication information is set to a second value, the first indication information indicates the first handover type and the second handover type. For example, the first indication information occupies one bit. When a value of the first indication information is 1, the first indication information indicates the first handover type; or when a value of the first indication information is 0, the first indication information indicates the first handover type and the second handover type.

Optionally, the source network device may further send second indication information to the candidate network device, where the second indication information indicates the second handover type. The first indication information and the second indication information may be included in a same message, for example, in different information elements of the same handover request message; or may be included in different messages. This is not limited in this application. The first handover type and the second handover type are respectively indicated by different indication information, to help improve information transmission reliability.

Based on the same technical concept, this application further provides an embodiment. In this embodiment, one piece of indication information may be designed. Different values of the indication information may indicate whether to trigger the cell handover of the first handover type and/or whether to trigger the cell handover of the second handover type. The indication information is denoted as indication information #A. In this embodiment, the source network device sends the indication information #A to the candidate network device, so that the candidate network device may determine whether the cell handover of the first handover type and/or the cell handover of the second handover type is triggered by the source network device.

Using an example in which the indication information #A occupies two bits, a representation form of the indication information #A may be enumerated in Table 1.

**Table 1**

| Scenario | Value of the indication information | Indicated meaning or content |
|---|---|---|
| Trigger neither the cell handover of the first handover type nor the cell handover of the second handover type | 00 | None |
| Trigger the cell handover of the first handover type | 10 | L1/L2 CHO |
| Trigger the cell handover of the second handover type | 01 | L3 CHO |
| Trigger the cell handover of the first handover type and the cell handover of the second handover type | 11 | L1/L2 CHO and L3 CHO |

As enumerated in Table 1, when the value of the indication information #A is 10 or 11, a function of the indication information #A is the same as that of the first indication information. Specifically, the value 10 corresponds to the case in which the first indication information indicates the first handover type, and the value 11 corresponds to the case in which the first indication information indicates the first handover type and the second handover type.

Based on the descriptions of the first indication information and the indication information #A, when the source network device triggers the first handover type and does not trigger the second handover type, the first indication information may be used for indication. An information element may be reused in the handover request message or a new information element may be added to the handover request message for the first indication information. The first indication information may be indicated by the information element L1/L2 CHO {True, False}, and the value is True. Alternatively, the first indication information may occupy one bit, and a value of the first indication information is 1. The first indication information may alternatively include bits whose values are 10 in Table 1. Alternatively, the first indication information may be a combination of the foregoing plurality of indication manners. For example, the information element in the handover request message or the new information element added to the handover request message indicates the first handover type. Based on this, second indication information whose value is, for example, 10 in Table 1 further indicates the first handover type. In this way, accuracy of indicating the first handover type can be improved by repeatedly indicating the first handover type. When the source network device triggers the second handover type, the indication information #A may be used for indication, and may include, for example, the bits whose values are 01 in Table 1. Alternatively, the following information element, namely, L3 CHO {True, False}, may be used for indication, where when a value of the information element is True, it indicates that the cell handover of the second handover type is triggered; or when a value of the information element is False, it indicates that the cell handover of the second handover type is not triggered. When the source network device triggers neither the second handover type nor the first handover type, second indication information may be used for indication, and may include, for example, the bits whose values are 00 in Table 1. When the source network device triggers the second handover type and the first handover type, the first indication information may be used for indication, and may occupy one bit whose value is 0; or second indication information may be used for indication, and includes, for example, the bits whose values are 11 in Table 1.

Optionally, in an implementation, if the source network device triggers the first handover type and the second handover type, two pieces of indication information may respectively indicate the two handover types. In this implementation, the source network device may further send the second indication information in addition to the first indication information to the candidate network device, where the second indication information indicates the second handover type. The first indication information and the second indication information may be included in a same message, for example, in different information elements or a same information element of the same message; or may be included in different messages. This is not limited in this application. Optionally, the second indication information includes one bit. For example, if a value of the bit is 1, it indicates that the second handover type is triggered. Optionally, the second indication information may be the foregoing indication information #A, and the indication information #A includes, for example, the bits whose values are 01 in Table 1. Optionally, the second indication information is indicated by the information element L3 CHO {True, False} whose value is True. The first handover type and the second handover type are respectively indicated by different indication information, to help improve the information transmission reliability.

When the source network device indicates the first handover type and the second handover type to the candidate network device, the indication information indicating the first handover type and the second handover type may be included in the handover request message. The handover request message may carry the first handover preparation information for the cell handover of the first handover type and second handover preparation information for the cell handover of the second handover type. The first handover preparation information may be used by the candidate network device to determine the first handover configuration corresponding to the first handover type, and the second handover preparation information may be used by the candidate network device to determine a second handover configuration corresponding to the second handover type. The candidate network device may further send the first handover configuration and the second handover configuration to the source network device.

The following may use an example to describe a manner of transmitting the first handover preparation information and the second handover preparation information.

When triggering the cell handover of the first handover type and the cell handover of the second handover type for a same candidate network device or a same candidate cell, the source network device sends the first handover preparation information and the second handover preparation information to the candidate network device. If the first handover preparation information and the second handover preparation information are carried in a same handover request message for sending, the handover request message may be represented by Handover Request {L1/L2 CHO configuration information, L3 CHO configuration information}. Alternatively, the first handover preparation information and the second handover preparation information may be sent by using two handover request messages, and the two handover request messages may be respectively represented by Handover Request 1 {L1/L2 CHO configuration information} and Handover Request 2 {L3 CHO configuration information}.

Some information in the first handover preparation information is the same as that in the second handover preparation information. For example, an ID of the candidate cell and an Xn application protocol identifier (Xn Application Protocol ID, Xn AP ID) of the terminal device in the source cell are the same. The same information may be sent once in a same handover request message, and does not need to be repeatedly sent, thereby reducing the signaling overheads. The Xn application protocol identifier of the terminal device may be understood as an ID of the terminal device over an Xn interface. Some different configuration information in the first handover preparation information and the second handover preparation information needs to be separately indicated. For example, although the first handover type and the second handover type correspond to the same candidate cell, the first handover type and the second handover type correspond to different RRC contexts (RRC Contexts). The RRC context is an RRC context of the terminal device in the source cell. The RRC contexts in the first handover preparation information and the second handover preparation information may be separately indicated. As the contexts for the first handover type and the second handover type are located in different containers, a representation form of the handover request message including the first handover preparation information and the second handover preparation information may be exemplified as follows: For example, the handover request message may be represented by Handover Request {the ID of the candidate cell, the L1/L2 CHO RRC context, the L3 CHO RRC context, other configuration information}. For another example, the handover request message may be represented by Handover Request {the ID of the candidate cell, the RRC context (the L1/L2 CHO RRC context, the L3 CHO RRC context), other configuration information}.

Some different configuration information in the first handover preparation information and the second handover preparation information may also be processed in the manner of configuring the RRC context. Details are not described.

Optionally, after triggering the cell handover of the first handover type, the source network device may not immediately send the first indication information to the candidate network device, but may send the first indication information to the candidate network device after waiting for specific duration. In this way, the source network device may determine, within the waiting duration, whether to trigger the cell handover of the second handover type. For example, if the source network device triggers the cell handover of the second handover type within the waiting duration, the source network device may indicate to the candidate network device that the cell handover of the first handover type and the cell handover of the second handover type are triggered. For a specific indication manner, refer to the foregoing manner of indicating the first handover type and the second handover type. Details are not described herein. For another example, if the cell handover of the second handover type is not triggered within the waiting duration, the source network device only needs to indicate the first handover type to the candidate network device. Optionally, in an implementation, the method further includes: The candidate network device sends a second handover configuration corresponding to the second handover type to the source network device.

Optionally, the first handover configuration and the second handover configuration may be sent to the source network device by using a same message or by using different messages. For example, the first handover configuration and/or the second handover configuration are/is included in a handover request acknowledgment message.

Based on the foregoing descriptions of the first indication information, the second indication information, and the indication information #A, the first indication information, the second indication information, and the indication information #A may be collectively referred to as indication information. After receiving the indication information, the candidate network device determines the handover type based on the indication information, and sends the handover configuration corresponding to the determined handover type to the source network device. For example, when the indication information indicates the first handover type, the candidate network device sends, to the source network device based on the indication information, the first handover configuration corresponding to the first handover type. When the indication information indicates the second handover type, the candidate network device may send, to the source network device based on the indication information, the second handover configuration corresponding to the second handover type.

In conclusion, the candidate network device sends, to the source network device based on the received indication information, the handover configuration corresponding to the handover type indicated by the indication information.

The following may use an example to describe a manner of transmitting the first handover configuration and the second handover configuration.

The first handover configuration and the second handover configuration may be carried in a same RRC reconfiguration (RRCReconfiguration) message, and the RRC reconfiguration message may also be referred to as an RRC container (RRC container). Some information in the first handover configuration is the same as that in the second handover configuration. The same information may be sent once in the same handover request acknowledgment message, and does not need to be repeatedly sent, thereby reducing the signaling overheads. For example, the handover request acknowledgment message may be represented by RRC container {L1/L2 CHO Acknowledge, L3 CHO Acknowledge}.

The first handover configuration and the second handover configuration may be separately carried in different RRC containers. For example, the two RRC containers are represented by an RRC container 1 {L1/L2 CHO Acknowledge} and an RRC container 2 {L3 CHO Acknowledge}. The RRC container 1 and the RRC container 2 may be included in the same handover request acknowledgment message, or may be included in different handover request acknowledgment messages.

It may be understood that, regardless of whether the candidate network device receives the first handover preparation information and the second handover preparation information by using one handover request message or two handover request messages, the candidate network device may randomly choose to send the first handover configuration and the second handover configuration by using one RRC container or separately by using different RRC containers.

For example, when receiving one piece of handover preparation information, the candidate network device may wait for specific duration. If the other piece of handover preparation information is received within the waiting duration, the candidate network device may choose to send the two handover configurations by using one RRC container. If the other piece of handover preparation information is not received within the waiting duration, a handover configuration corresponding to the received handover preparation information is sent by using one RRC container. When the other piece of handover preparation information is received, a handover configuration corresponding to the other piece of handover preparation information is sent by using another RRC container.

When sending the handover configuration to the source network device, the candidate network device further indicates, to the source network device, the handover type corresponding to the handover configuration, so that the source network device can learn of a specific type of the received handover configuration. In an implementation, the candidate network device may send third indication information to the source network device, where the third indication information indicates the first handover type and/or the second handover type. For example, the candidate network device sends the first handover configuration and the third indication information to the source network device, where the third indication information indicates the first handover type, and indicates that the first handover configuration is a configuration corresponding to the first handover type. For another example, the candidate network device sends the second handover configuration and the third indication information to the source network device, where the third indication information indicates the second handover type, and indicates that the second handover configuration is a configuration corresponding to the second handover type. For another example, the candidate network device sends the first handover configuration, the second handover configuration, and the third indication information to the source network device, where the third indication information indicates the first handover type and the second handover type, and indicates that the sent handover configuration is a configuration corresponding to the first handover type and the second handover type. The third indication information may be sent together with the handover configuration. For example, the third indication information may be included in the handover request acknowledgment message together with the handover configuration. For a manner in which the third indication information indicates the handover type, refer to the descriptions of the first indication information or the indication information #A. Details are not described herein again. It may be understood that, if the third indication information and the handover configuration (the first handover configuration and/or the second handover configuration) are included in a same message, the third indication information is set outside the RRC container including the handover configuration. The handover configuration is transmitted to the source network device by using the RRC container, and the source network device does not read content of the RRC container. Therefore, the source network device cannot learn of the handover type corresponding to the handover configuration. However, the source network device can learn of, by using the third indication information, the handover type corresponding to the received handover configuration. For example, when the source network device requests the handover configurations for the first handover type and the second handover type from the candidate network device, if the source network device determines, based on the third indication information, that only the first handover configuration is received, the source network device may know that the second handover configuration is still not received. In this case, the source network device may wait for specific duration to receive the second handover configuration. If the second handover configuration is still not received, it may be understood that the candidate network device rejects to feed back the second handover configuration. For example, if a cell served by the candidate network device is insufficient in resources, and cannot reserve a resource for the terminal device, the candidate network device may reject to feed back the second handover configuration.

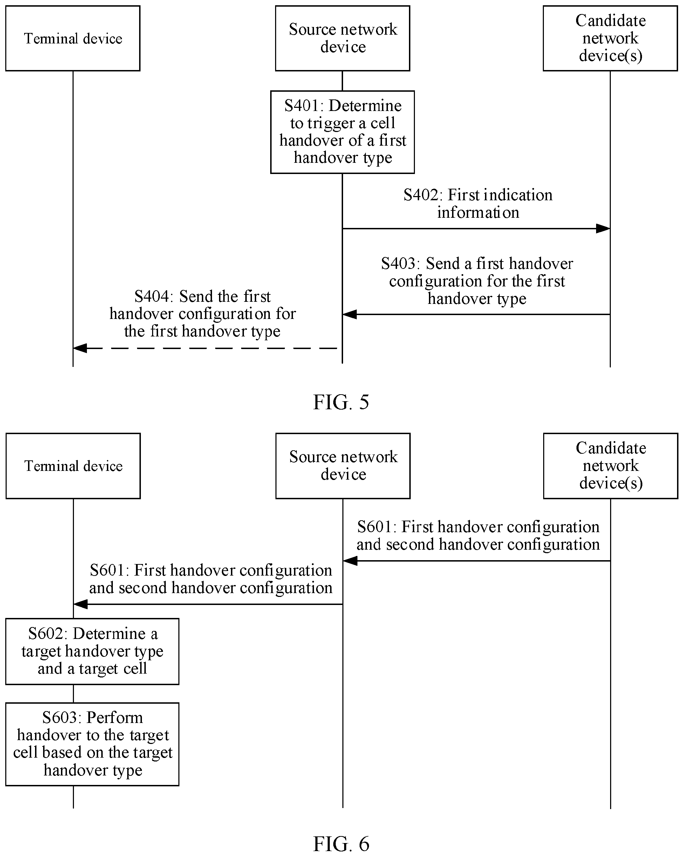

As shown in FIG. 5, based on the embodiment in FIG. 4, after S403, the method may further include the following step:
S404: The source network device sends the first handover configuration to the terminal device. Correspondingly, the terminal device receives the first handover configuration from the source network device.

The source network device forwards, to the terminal device, the RRC container received from the candidate network device. The RRC container includes the first handover configuration.

When the candidate network device sends the second handover configuration to the source network device, the source network device forwards the second handover configuration to the terminal device, and the terminal device receives the second handover configuration. This is similar to the forwarding of the first handover configuration.

The source network device may forward the first handover configuration and the second handover configuration to the terminal device together, or may separately forward the first handover configuration and the second handover configuration. For example, when the handover request message sent by the source network device to the candidate network device indicates the first handover type and the second handover type, the source network device may wait for specific duration when receiving one of the handover configurations, and forward the two handover configurations to the terminal device together if the other handover configuration is received within the waiting duration. This can help reduce the signaling overheads.

Alternatively, the source network device may forward the handover configurations to the terminal device based on the manner in which the candidate network device sends the first handover configuration and the second handover configuration. For example, if the source network device separately receives the first handover configuration and the second handover configuration, the source network device separately forwards the first handover configuration and the second handover configuration to the terminal device. If the source network device receives the first handover configuration and the second handover configuration that are sent together, the source network device sends the first handover configuration and the second handover configuration to the terminal device together.

Certainly, in this application, the source network device may alternatively receive the first handover configuration and the second handover configuration that are sent together, but choose to separately forward the first handover configuration and the second handover configuration to the terminal device.

The handover configuration sent by the candidate network device to the terminal device through the source network device is used by the terminal device to select the handover type and a target cell to perform the cell handover.

The following describes another handover method provided in an embodiment of this application, to enable a terminal device to select a handover type and a target cell. As shown in FIG. 6, a procedure for the another handover method is described as follows.

S601: A candidate network device sends a first handover configuration and a second handover configuration to the terminal device through a source network device. Correspondingly, the terminal device receives the first handover configuration and the second handover configuration from the candidate network device.

The first handover configuration includes a configuration of a candidate cell of a first handover type, and the second handover configuration includes a configuration of a candidate cell of a second handover type.

S602: The terminal device determines a target handover type and the target cell.

The terminal device may determine the target handover type from the first handover type and the second handover type, and determine the target cell from the candidate cell of the first handover type and the candidate cell of the second handover type.

The target handover type is the first handover type or the second handover type, and the target cell is the candidate cell of the first handover type or the candidate cell of the second handover type.

S603: The terminal device performs handover to the target cell based on the target handover type. Specifically, the terminal device initiates a random access process to the target cell through, for example, 2-step random access (a 2-step RACH) or 4-step random access (a 4-step RACH). Details are not described in this application.

In the embodiment in FIG. 6, the terminal device receives two handover configurations, so that the terminal device may perform beam-level measurement based on the first handover configuration, perform cell-level measurement based on the second handover configuration, and further determine the target handover type and the target cell based on a beam-level measurement result and a cell-level measurement result. In this way, when the source network device triggers an L1/L2 CHO and an L3 CHO, an appropriate target handover type and target cell can be flexibly selected, to complete the cell handover and improve a handover success rate.

The following provides some optional implementations based on the embodiment in FIG. 6.

The terminal device may determine the target handover type and the target cell in the following several manners.

Manner 1: A candidate cell that is of both the two handover types and that meets handover conditions corresponding to the two handover types is preferentially selected as the target cell. If the candidate cell that meets the foregoing conditions exists, the first handover type is preferentially selected as the target handover type.

The terminal device receives the handover configuration from the candidate network device. When a candidate cell corresponds to both the first handover configuration and the second handover configuration, the terminal device may determine that the candidate cell is a candidate cell of both the two handover types. That a candidate cell corresponds to a handover configuration may mean that the handover configuration includes an identifier of the candidate cell.

The terminal device may obtain the beam-level measurement result for the candidate cell of the first handover type, obtain the cell-level measurement result for the candidate cell of the second handover type, determine, based on the beam-level measurement result, whether the candidate cell of the first handover type meets the handover condition of the first handover type, and determine, based on the cell-level measurement result, whether the candidate cell of the second handover type meets the handover condition of the second handover type. The cell-level measurement result is usually more stable than the beam-level measurement result. Therefore, when the candidate cell that meets the foregoing conditions exists, it indicates that a measurement result for the candidate cell is stable. On this basis, selecting the first handover type can reduce a handover delay. In this way, the handover delay can be reduced when stability of the measurement result is ensured.

If a plurality of candidate cells that meet the foregoing conditions exist, one of the plurality of cells may be determined as the target cell based on one or more of the following parameters: reference signal received power (reference signal received power, RSRP), reference signal received quality (reference signal received quality, RSRQ), whether quality of a beam reaches a threshold, or a quantity of beams associated with a contention-free random access (contention-free random access, CFRA) resource. For example, the parameter is the RSRQ. The terminal device may select, from the plurality of candidate cells based on RSRQ corresponding to the plurality of candidate cells, a cell with best RSRQ as the target cell.

For example, if a first candidate cell is the candidate cell of the first handover type, is the candidate cell of the second handover type, meets the handover condition of the first handover type, and meets the handover condition of the second handover type, the first candidate cell is determined as the target cell, and the first handover type is determined as the target handover type.

For another example, if a plurality of second candidate cells are candidate cells of the first handover type, are candidate cells of the second handover type, meet the handover condition of the first handover type, and meet the handover condition of the second handover type, the terminal device determines, based on one or more of the following parameters, that one of the plurality of second candidate cells is the target cell: reference signal received power, reference signal received quality, whether quality of a beam reaches a threshold, or a quantity of beams associated with a contention-free random access resource.

The following uses an example to describe an optional implementation process in which the terminal device determines the target handover type and the target cell based on the manner 1.

The terminal device determines whether a candidate cell meets a handover condition. The terminal device determines whether the candidate cell of the first handover type meets the handover condition of the first handover type, and determines whether the candidate cell of the second handover type meets the handover condition of the second handover type.

If M candidate cells meet the following conditions: being the candidate cell of the first handover type and the candidate cell of the second handover type, it is preferentially determined whether the M candidate cells meet the handover condition. M is a positive integer. If one cell that meets the handover condition of the first handover type and the handover condition of the second handover type exists in the M candidate cells, the cell that meets the handover condition of the first handover type and the handover condition of the second handover type is used as the target cell, and the first handover type is selected as the target handover type. If a plurality of cells that meet the handover condition of the first handover type and the handover condition of the second handover type exist in the M candidate cells, the first handover type is selected as the target handover type, and one of the plurality of cells may be determined as the target cell based on one or more of the following parameters: RSRP, RSRQ, whether quality of a beam reaches a threshold, or a quantity of beams associated with a contention-free random access resource. For example, when the quality of the beam reaches the threshold, the beam may be considered as a good beam, and a cell corresponding to the good beam may be selected as the target cell. For another example, if both a cell 1 and a cell 2 in the M candidate cells meet the handover condition of the first handover type and the handover condition of the second handover type, and RSRP of the cell 1 is higher than RSRP of the cell 2, the terminal device selects the cell 1 as the target cell.

If no cell that meets both the handover condition of the first handover type and the handover condition of the second handover type exists in the M candidate cells, and a cell that meets a handover condition of only one handover type exists, the cell that meets the handover condition may be selected as the target cell, and the handover type that meets the handover condition is selected as the target handover type.

If none of the M candidate cells meets either of the handover condition of the first handover type and the handover condition of the second handover type, a cell that can meet a handover condition of any handover type other than the M candidate cells may be selected as the target cell. Alternatively, the cell handover may not be performed, or a handover failure cause may be reported to the source network device, so that the source network device re-triggers a cell handover.

Optionally, the terminal device may alternatively first determine whether all candidate cells indicated in the handover configuration meet a handover condition, to obtain a determining result. This process includes: The terminal device may determine whether the candidate cell of the first handover type meets the handover condition corresponding to the first handover type, and determine whether the candidate cell of the second handover type meets the handover condition corresponding to the second handover type. Then, the terminal device selects, based on the determining result, N candidate cells that meet the handover condition. N is a positive integer. The terminal device selects, from the N candidate cells, a candidate cell of both the first handover type and the second handover type as the target cell, and selects the first handover type as the target handover type. If a plurality of candidate cells of both the first handover type and the second handover type exist in the N candidate cells, one candidate cell is selected from the plurality of candidate cells as the target cell based on a parameter. For the parameter, refer to the foregoing descriptions.

Manner 2: A handover type with a high priority is selected as the target handover type based on priority information, and a cell that meets a handover condition in candidate cells of the handover type with the high priority is selected as the target cell. If a plurality of cells meet the handover condition, one of the plurality of cells may be determined as the target cell based on one or more of the following parameters: RSRP, RSRQ, whether quality of a beam reaches a threshold, or a quantity of beams associated with a contention-free random access resource.

For example, if a third candidate cell is the candidate cell of the first handover type and meets a handover condition of the first handover type, and a fourth candidate cell is the candidate cell of the second handover type and meets a handover condition of the second handover type, a candidate cell of the handover type with the high priority in the third candidate cell and the fourth candidate cell is determined as the target cell based on the priority information.

For another example, if each fifth candidate cell in a fifth candidate cell combination is the candidate cell of the first handover type and meets a handover condition of the first handover type, and each sixth candidate cell in a sixth candidate cell combination is the candidate cell of the second handover type and meets a handover condition of the second handover type, a candidate cell corresponding to the handover type with the high priority in the fifth candidate cell combination and the sixth candidate cell combination is determined based on the priority information. If it is determined, based on the priority information, that there are a plurality of candidate cells corresponding to the handover type with the high priority in the fifth candidate cell combination and the sixth candidate cell combination, one of the plurality of candidate cells is determined as the target cell based on one or more of the following parameters: reference signal received power, reference signal received quality, whether quality of a beam reaches a threshold, or a quantity of beams associated with a contention-free random access resource. The fifth candidate cell combination may include one or more fifth candidate cells, and the sixth candidate cell combination may include one or more sixth candidate cells.

The terminal device may determine whether all candidate cells in the handover configuration meet the handover condition, and select, based on a determining result, N cells that meet the handover condition. N is a positive integer. The terminal device selects, from the N cells, the target handover type and the target cell that correspond to a high priority.

Based on the foregoing manner 1 and manner 2, for example, the terminal device may select the target cell and the target handover type in the following manner. The terminal device determines whether all the candidate cells in the handover configuration meet the handover condition. Specifically, the terminal device determines whether the candidate cell of the first handover type meets the handover condition corresponding to the first handover type, and determines whether the candidate cell of the second handover type meets the handover condition corresponding to the second handover type. The N candidate cells that meet the handover condition are selected based on the determining result. If the N candidate cells are candidate cells of both the first handover type and the second handover type, when N=1, the candidate cell is selected as the target cell. When N is greater than 1, any candidate cell in the N cells may be selected as the target cell, or the target cell may be selected based on the foregoing parameter. The target handover type is the first handover type. If no candidate cell in the N candidate cells is a candidate cell of both the first handover type and the second handover type, the terminal device may select, based on the priority information, the target handover type and the target cell that correspond to the high priority. If one or more candidate cells in the N cells are of both the first handover type and the second handover type, the target cell is preferentially selected from the one or more candidate cells, and the target handover type is the first handover type.

In the foregoing, the priority information indicates priorities of the first handover type and the second handover type in a cell handover process. The priority information may be configured by a network side (for example, the source network device or the candidate network device) or determined by the terminal device. The priority information may indicate the priority for determining the target cell, and may further include a standard quantity or a reference quantity for determining the target cell. The standard quantity or the reference quantity may be any one or more of RSRP, RSRQ, whether quality of a beam reaches a threshold, or a quantity of beams associated with a contention-free random access resource.

For example, the network side may configure one piece of priority information, where the priority information indicates: If a plurality of L1/L2 CHOs and L3 CHOs are simultaneously configured, a candidate cell that is triggered for both the L1/L2 CHO and the L3 CHO is preferentially determined as the target cell, then a candidate cell that is triggered for the L2 CHO is determined as the target cell, and finally a candidate cell that is triggered for the L3 CHO is determined as the target cell. The priority information may alternatively indicate: If a plurality of candidate cells are triggered for the L1/L2 CHO and the L3 CHO, a plurality of candidate cells are triggered for the L1/L2 CHO, and/or a plurality of candidate cells are triggered for the L3 CHO, a cell with best signal strength is selected as the target cell with a highest priority. The priority information may alternatively indicate: If the target cell meets both the L1/L2 CHO and the L3 CHO, an access mode of the L1/L2 CHO is preferentially selected, and then an access mode of the L3 CHO is selected.

It may be understood that, the embodiment in FIG. 6 may be performed in combination with the embodiment in FIG. 4, or a solution that needs to be protected in this application may be separately formed.

When the embodiment in FIG. 6 is combined with the embodiment in FIG. 4, in S403, the candidate network device sends the first handover configuration to the terminal device through the source network device, and the first handover configuration may be designed as follows:
The first handover configuration includes a first random access resource, and there is a first correspondence between the first handover type and the first random access resource. In this way, when the terminal device performs random access to the target network device of the target cell, if the cell handover type selected by the terminal device is the first handover type, the terminal device selects the first random access resource corresponding to the first handover type to perform random access. The target network device is one of the candidate network devices. The target network device receives a first message in a random access process from the terminal device. The target network device determines, based on the first correspondence and the first random access resource corresponding to the first message, that the handover type of the cell handover initiated by the terminal device is the first handover type. The first random access resource may be a time domain resource, a frequency domain resource, or a code domain resource. For example, the first message is a message 1 in a 4-step random access process, and the first random access resource may be a preamble included in the message 1, or may be a time domain resource or a frequency domain resource associated with the preamble.

If the candidate network device further sends the second handover configuration to the terminal device, the second handover configuration may correspond to a second random access resource. In this way, the handover configurations may be distinguished by using different random access resources. When the terminal device performs random access, the target network device may distinguish, based on the random access resource, the handover type of the cell handover initiated by the terminal device.

Based on the same technical concept, the first handover configuration includes a first cell radio network temporary identifier (cell radio network temporary identifier, C-RNTI), and there is a second correspondence between the first handover type and the first C-RNTI. In this way, when the terminal device performs random access to the target network device of the target cell, if the cell handover type selected by the terminal device is the first handover type, the terminal device sends the first C-RNTI to the target network device. The target network device is one of the candidate network devices. The target network device receives the first C-RNTI from the terminal device, and the network device determines, based on the first C-RNTI and the second correspondence, that the handover type of the cell handover initiated by the terminal device is the first handover type.

If the candidate network device further sends the second handover configuration to the terminal device, the second handover configuration may correspond to a second C-RNTI. In this way, the handover configurations may be distinguished by using different C-RNTIs. When the terminal device performs random access, the target network device may distinguish, based on the C-RNTI, the handover type of the cell handover initiated by the terminal device.

Alternatively, the terminal device may report the handover type of the initiated cell handover to the target network device. For example, the terminal device sends fourth indication information to the target network device, where the fourth indication information indicates the handover type of the cell handover initiated by the terminal device. The fourth indication information may be one-bit information. For example, if a value of the fourth indication information is 0, the fourth indication information indicates the first handover type; or if a value of the fourth indication information is 1, the fourth indication information indicates the second handover type. The fourth indication information may be included in an RRC reconfiguration complete (RRCReconfigurationComplete) message, or may be separately sent. Optionally, the fourth indication information may be carried in a message 3 (MSG3) in the 4-step random access process, or may be carried in a message A (MSGA) in a 2-step random access process.

In a possible design, based on the embodiment in FIG. 4, optionally, the target network device may further send fifth indication information to the source network device, where the fifth indication information indicates the type of the cell handover that has been performed by the terminal device. The fifth indication information may be carried in a handover success (handover success) message. For a manner in which the fifth indication information indicates the handover type, refer to the fourth indication information. The target network device may determine, based on the fourth indication information reported by the terminal device, the handover type of the cell handover initiated by the terminal device, to send the fifth indication information to the source network device. Alternatively, the target network device may determine, based on the first correspondence and the second correspondence, the handover type of the cell handover initiated by the terminal device, to determine the fifth indication information.

It may be understood that the terminal device may fail to initiate the cell handover. Regardless of whether the terminal device successfully performs the cell handover, the target network device may determine, based on the first correspondence and the second correspondence, the handover type of the cell handover initiated by the terminal device, provided that the target network device receives the message 1 in the 4-step random access process or the message A in the 2-step random access process.

After receiving the fifth indication information of the target network device, the source network device may determine, based on the fifth indication information, the type of the cell handover performed by the terminal device. The source network device determines, based on the type of the cell handover performed by the terminal device, a type of a cell handover performed in the source cell, where the source cell belongs to the source network device, and is a cell accessed by the terminal device before the current cell handover. For example, the source network device collects, as historical information, a type of a cell handover performed by one or more terminal devices in the source cell, and determines, based on the historical information, a handover type that is more easily triggered by the terminal device in the source cell. In this way, the source network device may configure, for a subsequent cell handover to be performed in the source cell, the handover type that is more easily triggered. Alternatively, for a subsequent cell handover to be performed in the source cell, the source network device may configure, based on the historical information and in consideration of average use of a random access resource of the target network device, a handover type that can better balance the random access resource of the target network device. Alternatively, the source network device may determine a handover failure probability of the handover type based on the historical information, and configure, for a subsequent cell handover to be performed in the source cell, a handover type with a low handover failure probability. Optionally, the source network device may determine, based on the beam-level measurement result and the cell-level measurement result that are received from the terminal device and with reference to the foregoing historical information, a specific type of a cell handover to be triggered.

It may be understood that, to implement functions of the source network device, the candidate network device, and the terminal device in the foregoing embodiments, the source network device, the candidate network device, and the terminal device include corresponding hardware structures and/or software modules for performing the functions. A person skilled in the art should be easily aware that, in combination with the units and method steps in the examples described in embodiments disclosed in this application, this application can be implemented by hardware or a combination of hardware and computer software. Whether a function is performed by hardware or hardware driven by computer software depends on particular application scenarios and design constraints of the technical solutions.

It should be noted that the method and the apparatus provided in this application are based on a same technical concept or similar technical concepts. Because principles of resolving a problem by using the method and the apparatus are similar, mutual reference may be made to implementations of the apparatus and the method, and repeated parts are not described again.

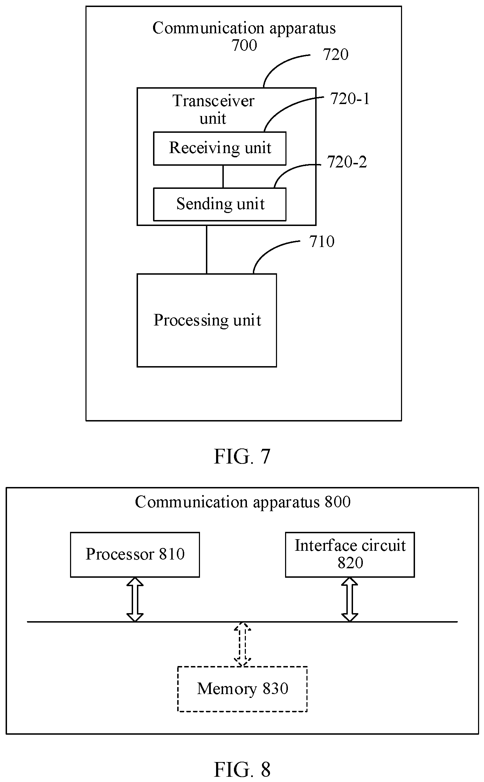

FIG. 7 and FIG. 8 are diagrams of structures of possible communication apparatuses according to embodiments of this application. These communication apparatuses may be configured to implement functions of the source network device, the candidate network device, and the terminal device in the foregoing method embodiments, and therefore can also achieve beneficial effects in the foregoing method embodiments. In this embodiment of this application, the communication apparatus may be the source network device 101 shown in FIG. 1, may be the candidate network device 102 shown in FIG. 1, may be the terminal device 103 shown in FIG. 1, or may be a module (for example, a chip) used in the source network device, the candidate network device, and the terminal device.

As shown in FIG. 7, the communication apparatus 700 includes a processing unit 710 and a transceiver unit 720. The processing unit 710 is configured to invoke the transceiver unit 720 to perform a receiving or sending operation. The transceiver unit 720 may further include a receiving unit 720-1 and a sending unit 720-2. The communication apparatus 700 is configured to implement the functions of the source network device, the candidate network device, and the terminal device in the foregoing method embodiments.

In an embodiment, when the communication apparatus 700 is configured to implement the function of the source network device in the method embodiments, the processing unit 710 is configured to determine to trigger a cell handover of a first handover type, where the first handover type includes a conditional handover CHO that is based on a beam-level measurement result. The sending unit 720-2 is configured to send first indication information to a candidate network device to which a candidate cell belongs, where the first indication information indicates the first handover type. The receiving unit 720-1 is configured to receive a first handover configuration corresponding to the first handover type from the candidate network device.

Optionally, the first indication information is included in a handover request message.

Optionally, the first indication information further indicates a second handover type, and the second handover type includes a CHO that is based on a cell-level measurement result.

Optionally, the receiving unit 720-1 is further configured to receive third indication information from the candidate network device, where the third indication information indicates the first handover type and/or the second handover type, and the second handover type includes the CHO that is based on the cell-level measurement result.

Optionally, the receiving unit 720-1 is further configured to receive fifth indication information from a network device accessed by a terminal device after a handover, where the fifth indication information indicates a type of the cell handover that has been performed by the terminal device, the handover type is the first handover type and/or the second handover type, and the second handover type includes the CHO that is based on the cell-level measurement result. The processing unit 710 is further configured to determine, based on the type of the cell handover performed by the terminal device, a type of a cell handover performed in a source cell, where the source cell is a cell in which the terminal device is located before the cell handover.

Optionally, when determining to trigger the cell handover of the first handover type, the processing unit 710 is configured to determine, based on the first handover type and the second handover type, to trigger the cell handover of the first handover type, where the second handover type includes the CHO that is based on the cell-level measurement result.

In an embodiment, when the communication apparatus 700 is configured to implement the function of the candidate network device in the method embodiments:
the receiving unit 720-1 is configured to receive first indication information from a source network device, where the first indication information indicates a first handover type, and the first handover type includes a conditional handover CHO that is based on a beam-level measurement result; and
the processing unit 710 is configured to determine, based on the first indication information, a first handover configuration corresponding to the first handover type, and send the first handover configuration for the first handover type to the source network device by using the sending unit 720-2.

Optionally, the first indication information is included in a handover request message.

Optionally, the first indication information further indicates a second handover type, and the second handover type includes a CHO that is based on a cell-level measurement result.

Optionally, the sending unit 720-2 is further configured to send third indication information to the source network device, where the third indication information indicates the first handover type and/or the second handover type, and the second handover type includes the CHO that is based on the cell-level measurement result.

Optionally, the first handover configuration includes a first random access resource, and there is a first correspondence between the first handover type and the first random access resource; and/or
the first handover configuration includes a first cell radio network temporary identifier, and there is a second correspondence between the first handover type and the first cell radio network temporary identifier.

Optionally, the receiving unit 720-1 is further configured to receive a first message in a random access process from a terminal device.

The processing unit 710 is configured to determine, based on the first correspondence and the first random access resource corresponding to the first message, that a handover type of a cell handover initiated by the terminal device is the first handover type.

Optionally, the receiving unit 720-1 is further configured to receive the first cell radio network temporary identifier from the terminal device.

The processing unit 710 is further configured to determine, based on the first cell radio network temporary identifier and the second correspondence, that the handover type of the cell handover initiated by the terminal device is the first handover type.

Optionally, when the candidate network device is a target network device to which the terminal device performs a cell handover, the receiving unit 720-1 is further configured to receive fourth indication information from the terminal device, where the fourth indication information indicates a handover type of the cell handover initiated by the terminal device.

Optionally, when the candidate network device is a network device accessed by the terminal device after the handover, the sending unit 720-2 is configured to send fifth indication information to the source network device, where the fifth indication information indicates the type of the cell handover that has been performed by the terminal device.

In an embodiment, when the communication apparatus 700 is configured to implement the function of the terminal device in the method embodiments:
the receiving unit 720-1 is configured to receive a first handover configuration and a second handover configuration from a candidate network device, where the first handover configuration includes a configuration of a candidate cell of a first handover type, the second handover configuration includes a configuration of a candidate cell of a second handover type, the first handover type includes a conditional handover CHO that is based on a beam-level measurement result, and the second handover type includes a CHO that is based on a cell-level measurement result;
the processing unit 710 is configured to determine a target handover type from the first handover type and the second handover type, and determine a target cell from the candidate cell of the first handover type and the candidate cell of the second handover type; and
the processing unit 710 is further configured to perform handover to the target cell based on the target handover type.

Optionally, when determining the target handover type from the first handover type and the second handover type and determining the target cell from the candidate cell of the first handover type and the candidate cell of the second handover type, the processing unit 710 is configured to:
if a first candidate cell is the candidate cell of the first handover type, is the candidate cell of the second handover type, meets a handover condition of the first handover type, and meets a handover condition of the second handover type, determine the first candidate cell as the target cell, and determine the first handover type as the target handover type.

Optionally, when determining the target handover type from the first handover type and the second handover type and determining the target cell from the candidate cell of the first handover type and the candidate cell of the second handover type, the processing unit 710 is configured to: if a plurality of second candidate cells are candidate cells of the first handover type, are candidate cells of the second handover type, meet a handover condition of the first handover type, and meet a handover condition of the second handover type, determine, based on one or more of the following parameters, that one of the plurality of second candidate cells is the target cell: reference signal received power, reference signal received quality, whether quality of a beam reaches a threshold, or a quantity of beams associated with a contention-free random access resource.

Optionally, when determining the target handover type from the first handover type and the second handover type and determining the target cell from the candidate cell of the first handover type and the candidate cell of the second handover type, the processing unit 710 is configured to:
if a third candidate cell is the candidate cell of the first handover type and meets a handover condition of the first handover type, and a fourth candidate cell is the candidate cell of the second handover type and meets a handover condition of the second handover type, determine, based on priority information, a candidate cell of a handover type with a high priority in the third candidate cell and the fourth candidate cell as the target cell, where the priority information indicates priorities of the first handover type and the second handover type in a cell handover process.

Optionally, when determining the target handover type from the first handover type and the second handover type and determining the target cell from the candidate cell of the first handover type and the candidate cell of the second handover type, the processing unit 710 is configured to:
if a plurality of fifth candidate cells are candidate cells of the first handover type and meet a handover condition of the first handover type, and a plurality of sixth candidate cells are candidate cells of the second handover type and meet a handover condition of the second handover type,
determine, based on priority information, a plurality of cells corresponding to a high priority in the plurality of fifth candidate cells and the plurality of sixth candidate cells, where the priority information indicates priorities of the first handover type and the second handover type in a cell handover process; and
determine, based on one or more of the following parameters, that one of the plurality of cells is the target cell: reference signal received power, reference signal received quality, whether quality of a beam reaches a threshold, or a quantity of beams associated with a contention-free random access resource.

For more detailed descriptions of the processing unit 710, the transceiver unit 720, the receiving unit 720-1, and the sending unit 720-2, directly refer to related descriptions in the method embodiments. Details are not described herein again.

As shown in FIG. 8, the communication apparatus 800 includes a processor 810 and an interface circuit 820. The processor 810 and the interface circuit 820 are coupled to each other. It may be understood that the interface circuit 820 may be a transceiver or an input/output interface. Optionally, the communication apparatus 800 may further include a memory 830, configured to: store instructions executed by the processor 810, store input data needed by the processor 810 to run the instructions, or store data generated after the processor 810 runs the instructions.

When the communication apparatus 800 is configured to implement the handover method provided in the foregoing method embodiments, the processor 810 is configured to implement a function of the processing unit 710, and the interface circuit 820 is configured to implement a function of the transceiver unit 720.

When the communication apparatus is a chip used in the terminal device, the chip of the terminal device implements the function of the terminal device in the foregoing method embodiments. The chip of the terminal device receives information from another module (for example, a radio frequency module or an antenna) in the terminal device, where the information is sent by a network device to the terminal device; or the chip of the terminal device sends information to another module (for example, a radio frequency module or an antenna) in the terminal device, where the information is sent by the terminal device to a network device.

Both the source network device and the candidate network device may be network devices. When the communication apparatus is a chip used in the network device, the chip of the network device implements the function of the source network device or the candidate network device in the foregoing method embodiments. The chip of the network device receives information from another module (for example, a radio frequency module or an antenna) in the network device, where the information is sent by a terminal device to the source network device, sent by the source network device to the candidate network device, or sent by the candidate network device to the source network device. Alternatively, the chip of the network device sends information to another module (for example, a radio frequency module or an antenna) in the network device, where the information is sent by the source network device to a terminal device, sent by the source network device to the candidate network device, or sent by the candidate network device to the source network device. The module in the network device herein may be a baseband chip of the network device, or may be a DU or another module. The DU herein may be a DU in an open radio access network (open radio access network, O-RAN) architecture.

It may be understood that, the processor in embodiments of this application may be a central processing unit (Central Processing Unit, CPU), or may be another general-purpose processor, a digital signal processor (Digital Signal Processor, DSP), an application-specific integrated circuit (Application-Specific Integrated Circuit, ASIC), a field programmable gate array (Field Programmable Gate Array, FPGA) or another programmable logic device, a transistor logic device, a hardware component, or any combination thereof. The general-purpose processor may be a microprocessor or any regular processor.

In embodiments of this application, the memory may be a non-volatile memory, for example, a hard disk drive (hard disk drive, HDD) or a solid-state drive (solid-state drive, SSD), or may be a volatile memory (volatile memory), for example, a random access memory (random access memory, RAM). The memory is any other medium that can carry or store expected program code in a form of an instruction or a data structure and that can be accessed by a computer, but is not limited thereto. The memory in embodiments of this application may alternatively be a circuit or any other apparatus that can implement a storage function, and is configured to store program instructions and/or data.

A part or all of operations and functions performed by the source network device, the candidate network device, and the terminal device described in the foregoing method embodiments of this application may be implemented by a chip or an integrated circuit.

An embodiment of this application further provides a chip, including a processor, configured to support a communication apparatus in implementing functions of the devices in the foregoing method embodiments. In a possible design, the chip is connected to a memory or the chip includes the memory, and the memory is configured to store program instructions and data that are necessary for the communication apparatus.

An embodiment of this application provides a computer-readable storage medium storing a computer program. The computer program includes instructions for executing the foregoing method embodiments.

An embodiment of this application provides a computer program product including instructions. When the computer program product runs on a computer, the foregoing method embodiments are enabled to be implemented.

A person skilled in the art should understand that embodiments of this application may be provided as a method, a system, or a computer program product. Therefore, this application may use a form of hardware only embodiments, software only embodiments, or embodiments with a combination of software and hardware. In addition, this application may use a form of a computer program product that is implemented on one or more computer-usable storage media (including but not limited to a disk memory, a CD-ROM, an optical memory, and the like) that include computer-usable program code.

This application is described with reference to the flowcharts and/or block diagrams of the method, the device (system), and the computer program product according to embodiments of this application. It should be understood that computer program instructions may be used to implement each process and/or each block in the flowcharts and/or the block diagrams and a combination of a process and/or a block in the flowcharts and/or the block diagrams. These computer program instructions may be provided to a general-purpose computer, a special-purpose computer, an embedded processor, or a processor of another programmable data processing device to generate a machine, so that the instructions executed by the computer or the processor of the another programmable data processing device generate an apparatus for implementing a specific function in one or more processes in the flowcharts and/or in one or more blocks in the block diagrams. These computer program instructions may alternatively be stored in a computer-readable memory that can instruct a computer or another programmable data processing device to work in a specific manner, so that the instructions stored in the computer-readable memory generate an artifact that includes an instruction apparatus. The instruction apparatus implements a specific function in one or more processes in the flowcharts and/or in one or more blocks in the block diagrams.

These computer program instructions may alternatively be loaded onto a computer or another programmable data processing device, so that a series of operations and steps are performed on the computer or the another programmable device, to generate computer-implemented processing. Therefore, the instructions executed on the computer or the another programmable device provide steps for implementing a specific function in one or more processes in the flowcharts and/or in one or more blocks in the block diagrams.

The resource in embodiments of this application may also be referred to as a transmission resource, including one or more of a time domain resource, a frequency domain resource, and a code channel resource. The resource may carry data or signaling in an uplink communication process or a downlink communication process.

It should be understood that the term "and/or" in this specification describes only an association relationship between associated objects and represents that three relationships may exist. For example, A and/or B may represent the following three cases: Only A exists, both A and B exist, and only B exists.

It should be understood that, in embodiments of the present invention, "B corresponding to A" indicates that B is associated with A, and B can be determined based on A. However, it should be further understood that determining B based on A does not mean that B is determined based only on A. B may alternatively be determined based on A and/or other information.

"A plurality of" in embodiments of this application refers to two or more than two.

Descriptions such as "first" and "second" in embodiments of this application are merely used for illustration and distinguishing between described objects, are not sequenced, do not represent a special limitation on a quantity of described objects in embodiments of this application, and do not constitute any limitation on embodiments of this application.

Unless otherwise specified, "transmission" (transmit/transmission) in embodiments of this application refers to bidirectional transmission, and includes a sending action and/or a receiving action. Specifically, "transmission" in embodiments of this application includes data sending, data receiving, or data sending and receiving. That is, data transmission herein includes uplink data transmission and/or downlink data transmission. The data may include information and/or a signal. The uplink data transmission is transmission of uplink information and/or an uplink signal, and the downlink data transmission is transmission of downlink information and/or a downlink signal. Mutual reference may be made to content in embodiments of this application. Unless otherwise specified or a logical conflict occurs, terms and/or descriptions in different embodiments are consistent and may be referenced to each other. Technical features in different embodiments may be combined to form a new embodiment based on an internal logical relationship of the technical features.

It may be understood that in embodiments of this application, the terminal device and/or the network device may perform some or all steps in embodiments of this application. These steps or operations are merely examples. In embodiments of this application, other operations or variations of various operations may be further performed. In addition, the steps may be performed in a sequence different from a sequence presented in embodiments of this application, and not all the operations in embodiments of this application may be performed.

## Claims

1. A handover method, comprising:
determining, by a source network device, to trigger a cell handover of a first handover type, wherein the first handover type comprises a conditional handover CHO that is based on a beam-level measurement result;
sending, by the source network device, first indication information to a candidate network device to which a candidate cell belongs, wherein the first indication information indicates the first handover type; and
receiving, by the source network device, a first handover configuration from the candidate network device, wherein the first handover configuration corresponds to the first handover type.

2. The method according to claim 1, wherein the first indication information is comprised in a handover request message.

3. The method according to claim 1 or 2, wherein the first indication information further indicates a second handover type, and the second handover type comprises a CHO that is based on a cell-level measurement result.

4. The method according to claim 1 or 2, wherein the method further comprises: sending, by the source network device, second indication information to the candidate network device, wherein the second indication information indicates a second handover type, and the second handover type comprises a CHO that is based on a cell-level measurement result.

5. The method according to any one of claims 1 to 4, wherein the method further comprises:
receiving, by the source network device, third indication information from the candidate network device, wherein the third indication information indicates the first handover type and/or the second handover type, and the second handover type comprises the CHO that is based on the cell-level measurement result.

6. The method according to any one of claims 1 to 5, wherein the method further comprises:
receiving, by the source network device, fifth indication information from a network device accessed by a terminal device after a handover, wherein the fifth indication information indicates a type of the cell handover that has been performed by the terminal device, the type of the cell handover is the first handover type and/or the second handover type, and the second handover type comprises the CHO that is based on the cell-level measurement result; and
determining, by the source network device based on the fifth indication information, a type of a cell handover performed in a source cell.

7. The method according to any one of claims 1 to 6, wherein the determining, by a source network device, to trigger a cell handover of a first handover type comprises:
determining, by the source network device based on the first handover type and the second handover type, to trigger the cell handover of the first handover type, wherein the second handover type comprises the CHO that is based on the cell-level measurement result.

8. A handover method, comprising:
receiving, by a candidate network device, first indication information from a source network device, wherein the first indication information indicates a first handover type, and the first handover type comprises a conditional handover CHO that is based on a beam-level measurement result;
determining, by the candidate network device based on the first indication information, a first handover configuration corresponding to the first handover type; and
sending, by the candidate network device, the first handover configuration to the source network device.

9. The method according to claim 8, wherein the first indication information is comprised in a handover request message.

10. The method according to claim 8 or 9, wherein the first indication information further indicates a second handover type, and the second handover type comprises a CHO that is based on a cell-level measurement result.

11. The method according to claim 8 or 9, wherein the method further comprises: further receiving, by the candidate network device, second indication information from the source network device, wherein the second indication information indicates a second handover type, and the second handover type comprises a CHO that is based on a cell-level measurement result.

12. The method according to any one of claims 8 to 11, wherein the method further comprises:
sending, by the candidate network device, third indication information to the source network device, wherein the third indication information indicates the first handover type and/or the second handover type, and the second handover type comprises the CHO that is based on the cell-level measurement result.

13. The method according to any one of claims 8 to 12, wherein the first handover configuration comprises a first random access resource, and there is a first correspondence between the first handover type and the first random access resource; and/or
the first handover configuration comprises a first cell radio network temporary identifier, and there is a second correspondence between the first handover type and the first cell radio network temporary identifier.

14. The method according to claim 13, wherein the method further comprises:
receiving, by the candidate network device, a first message from a terminal device, wherein the first message is used in a random access process; and
determining, by the candidate network device based on the first correspondence and the first random access resource corresponding to the first message, that a type of a cell handover initiated by the terminal device is the first handover type.

15. The method according to claim 13 or 14, wherein the method further comprises:
receiving, by the candidate network device, the first cell radio network temporary identifier from the terminal device; and
determining, by the candidate network device based on the first cell radio network temporary identifier and the second correspondence, that the type of the cell handover initiated by the terminal device is the first handover type.

16. The method according to any one of claims 8 to 12, wherein the candidate network device is a target network device to which a terminal device performs a cell handover, and the method further comprises:
receiving, by the candidate network device, fourth indication information from the terminal device, wherein the fourth indication information indicates a type of the cell handover initiated by the terminal device.

17. The method according to any one of claims 13 to 16, wherein the candidate network device is a network device accessed by the terminal device after the handover, and the method further comprises:
sending, by the candidate network device, fifth indication information to the source network device, wherein the fifth indication information indicates the type of the cell handover that has been performed by the terminal device.

18. A handover method, comprising:
receiving, by a terminal device, a first handover configuration and a second handover configuration from a candidate network device, wherein the first handover configuration comprises a configuration of a candidate cell of a first handover type, the second handover configuration comprises a configuration of a candidate cell of a second handover type, the first handover type comprises a conditional handover CHO that is based on a beam-level measurement result, and the second handover type comprises a CHO that is based on a cell-level measurement result;
determining, by the terminal device, a target handover type from the first handover type and the second handover type, and determining a target cell from the candidate cell of the first handover type and the candidate cell of the second handover type; and
handing over, by the terminal device, to the target cell based on the target handover type.

19. The method according to claim 18, wherein the determining, by the terminal device, a target handover type from the first handover type and the second handover type, and determining a target cell from the candidate cell of the first handover type and the candidate cell of the second handover type comprises:
if a first candidate cell is the candidate cell of the first handover type, is the candidate cell of the second handover type, meets a handover condition of the first handover type, and meets a handover condition of the second handover type, determining the first candidate cell as the target cell, and determining the first handover type as the target handover type.

20. The method according to claim 18, wherein the determining, by the terminal device, a target handover type from the first handover type and the second handover type, and determining a target cell from the candidate cell of the first handover type and the candidate cell of the second handover type comprises:
if a plurality of second candidate cells are candidate cells of the first handover type, are candidate cells of the second handover type, meet a handover condition of the first handover type, and meet a handover condition of the second handover type, determining, by the terminal device based on one or more of the following parameters, that one of the plurality of second candidate cells is the target cell: reference signal received power, reference signal received quality, whether quality of a beam reaches a threshold, or a quantity of beams associated with a contention-free random access resource.

21. The method according to claim 18, wherein the determining, by the terminal device, a target handover type from the first handover type and the second handover type, and determining a target cell from the candidate cell of the first handover type and the candidate cell of the second handover type comprises:
if a third candidate cell is the candidate cell of the first handover type and meets a handover condition of the first handover type, and a fourth candidate cell is the candidate cell of the second handover type and meets a handover condition of the second handover type, determining, based on priority information, that a candidate cell of a handover type with a high priority in the third candidate cell and the fourth candidate cell is the target cell, wherein the priority information indicates priorities of the first handover type and the second handover type in a cell handover process.

22. The method according to claim 18, wherein the determining, by the terminal device, a target handover type from the first handover type and the second handover type, and determining a target cell from the candidate cell of the first handover type and the candidate cell of the second handover type comprises:
if a plurality of fifth candidate cells are candidate cells of the first handover type and meet a handover condition of the first handover type, and a plurality of sixth candidate cells are candidate cells of the second handover type and meet a handover condition of the second handover type,
determining, based on priority information, a plurality of cells of a handover type with a high priority in the plurality of fifth candidate cells and the plurality of sixth candidate cells, wherein the priority information indicates priorities of the first handover type and the second handover type in a cell handover process; and
determining, based on one or more of the following parameters, that one of the plurality of cells is the target cell: reference signal received power, reference signal received quality, whether quality of a beam reaches a threshold, or a quantity of beams associated with a contention-free random access resource.

23. A communication apparatus, comprising a module configured to perform the method according to any one of claims 1 to 7, a module configured to perform the method according to any one of claims 8 to 17, or a module configured to perform the method according to any one of claims 18 to 22.

24. A communication apparatus, comprising a processor, wherein the processor is configured to execute one or more computer programs, to enable the method according to any one of claims 1 to 7, the method according to any one of claims 8 to 17, or the method according to any one of claims 18 to 22 to be performed.

25. The communication apparatus according to claim 24, wherein the communication apparatus further comprises a memory, configured to store the one or more computer programs.

26. A computer-readable storage medium, wherein the storage medium stores a computer program or instructions; and when the computer program or the instructions are executed by a communication apparatus, the method according to any one of claims 1 to 7, the method according to any one of claims 8 to 17, or the method according to any one of claims 18 to 22 is enabled to be implemented.

27. A communication system, comprising a source network device and a candidate network device, wherein the source network device is configured to perform the method according to any one of claims 1 to 7, and the candidate network device is configured to perform the method according to any one of claims 8 to 17.

28. The system according to claim 27, wherein the system further comprises a terminal device, and the terminal device is configured to perform the method according to any one of claims 18 to 22.

29. A computer program product, wherein the computer program product stores a computer program or instructions; and when the computer program or the instructions are executed by a communication apparatus, the method according to any one of claims 1 to 7, the method according to any one of claims 8 to 17, or the method according to any one of claims 18 to 22 is enabled to be implemented.
